# EUROPÄISCHE PATENTSCHRIFT

(11) **EP 3 834 989 B1**
(45) Veröffentlichungstag und Bekanntmachung des Hinweises auf die Patenterteilung: **23.11.2022**
(21) Anmeldenummer: 19215201.5
(22) Anmeldetag: 11.12.2019
(51) Int. Cl.: B25B 7/14, B25B 27/10, B25B 27/14, B25B 27/12

(54) **HANDZANGENWERKZEUG UND VERFAHREN ZUR MONTAGE DESSELBEN**
HAND-HELD CLAMPING TOOL AND METHOD FOR ASSEMBLING THE SAME
OUTIL PINCE À MAIN ET PROCÉDÉ DE MONTAGE D'UN TEL OUTIL

(43) Veröffentlichungstag der Anmeldung: 16.06.2021
(73) Patentinhaber: WEZAG GmbH & Co. KG, 35260 Stadtallendorf (DE)
(72) Erfinder: Glockseisen, Thomas, 40217 Düsseldorf (DE); Gebhard, Gunthard, 35287 Amöneburg (DE)
(74) Vertreter: REHBERG HÜPPE + PARTNER

(56) Entgegenhaltungen:
- DE-A1- 2 854 633
- DE-A1-102005 022 188
- US-A1- 2011 214 538

## Beschreibung

### TECHNISCHES GEBIET DER ERFINDUNG

Die Erfindung betrifft ein Handzangenwerkzeug (also ein von Hand betätigtes Zangenwerkzeug), bei dem es sich insbesondere um eine Presszange, eine Crimpzange oder eine Schneidzange handelt. Des Weiteren betrifft die Erfindung ein Verfahren zur Montage eines Handzangenwerkzeugs.

Eine erfindungsgemäße Presszange kann bspw. zum manuellen Verpressen von Fassungen, Rohren oder Fittingen dienen. Derartige Presszangen sind bspw. in einer der Druckschriften DE 197 09 639 A1, DE 198 34 859 C2, DE 199 24 086 C2, DE 199 24 087 C2, DE 199 63 097 C1, DE 103 46 241 B3, DE 10 2007 001 235 B4, DE 10 2008 005 472 B3, EP 2 995 424 A1 und EP 2 826 598 A1 oder EP 3 208 044 A1 beschrieben.

Mittels einer erfindungsgemäßen Crimpzange kann über eine manuelle Betätigung von Handhebeln ein Verpressen oder Vercrimpen eines Werkstücks erfolgen. Hierbei dient eine Crimpzange insbesondere einer Herstellung einer dauerhaften mechanischen Verbindung und elektrischen Kontaktierung. Dies erfolgt vorzugsweise durch Vercrimpen eines Steckers mit einem Kabel oder einem elektrischen Leiter beliebiger Bauart. Je nach zum Einsatz kommendem Profil der Gesenke können unterschiedliche Crimpvorgänge mit der Crimpzange ausgeführt werden. Beispielsweise kann es sich um einen geschlossenen Crimp handeln, bei dem der Leiter in eine geschlossene Crimpzone eines Steckers oder in eine geschlossene Hülse eingeführt wird und durch plastische Verformung der Crimpzone oder der Hülse vercrimpt wird. Möglich ist aber auch, dass ein offener Crimp erzeugt wird, bei dem der Stecker eine offene Crimpzone aufweist, in die der Leiter von oben eingelegt werden kann. Um lediglich einige, die Erfindung nicht beschränkende Beispiele zu nennen, können mit dem hier einschlägigen Crimpwerkzeug
- Kabelschuhe nach DIN 4623,
- Aluminiumverbinder nach DIN 46329
- Aluminium-Presskabelschuhe nach DIN 48201
- Quetschkabelschuhe nach DIN 46234,
- Stiftkabelschuhe nach DIN 46230 oder
- Verbinder, Stecker oder Kabelschuhe für eine Verbindung mit einem Kabel oder Leiter, wie diese in dem Produktkatalog der WEZAG GmbH Werkzeugfabrik "Werkzeuge für die professionelle Anwendung" mit der Veröffentlichungs-Nr. 10/11 beschrieben sind,
vercrimpt werden.
Bei dem hergestellten Crimp kann es sich beispielsweise für einen geschlossenen Crimp um einen Sechskant- oder Hexagonalcrimp, einen Vierkantcrimp, einen B-Crimp, einen Trapezcrimp, einen modifizierten Trapezcrimp, einen Ovalcrimp, einen Dorncrimp oder einen Zweidorncrimp handeln. Ein offener Crimp kann bspw. als V-Crimp oder B-Crimp, als Rollcrimp oder als Doppelrollcrimp ausgebildet sein.

Zusätzlich zur Herstellung der elektrischen Verbindung zwischen Kabel oder Leiter und Stecker kann eine mechanische Verbindung mittels eines sogenannten Isolationscrimps hergestellt werden. Hierbei kann ein geschlossener Isolationscrimp oder ein offener Isolationscrimp (insbesondere V-Crimp oder B-Crimp, O-Crimp oder OV-Crimp) Einsatz finden. Hinsichtlich weiterer Informationen
- zur Ausgestaltung einer gattungsgemäßen Crimpzange,
- zu möglichen Einsatzbereichen der gattungsgemäßen Crimpzange und/oder
- zu unterschiedlichen möglichen Typen von Crimpverbindungen, welche mittels der gattungsgemäßen Crimpzange hergestellt werden können,
wird auf das Werk
- "Crimptechnik, Herstellung prozesssicherer Verbindungen von elektrischen Leitern und Steckern" der WEZAG GmbH Werkzeugfabrik, Die Bibliothek der Technik 342, Verlag Moderne Industrie, ISBN 978-3-68236-027-7
verwiesen.

Erfindungsgemäße Crimpzangen sind bspw. den Druckschriften EP 3 208 044 A1, EP 3 012 924 A1, EP 3 012 923 A1, EP 2 698 885 A1, EP 2 672 580 A1, EP 2 463 969 A2, DE 37 087 272 C2, DE 40 23 337 C1, DE 40 26 332 C2, DE 40 39 435 C1, DE 42 41 224 C1, DE 44 27 553 C2, DE 197 13 580 C2, DE 197 53 436 C2, DE 198 02 287 C1, DE 198 07 737 C2, DE 298 03 336 U1, DE 198 32 884 C1, DE 100 56 900 C1, DE 101 32 413 C2, DE 101 40 270 B4, DE 102 42 345 B3, DE 10 2005 003 615 B3, DE 10 2005 003 617 B3, DE 10 2007 038 626 B3, DE 10 2008 003 524 B4, DE 10 2008 012 011 B3, DE 20 2008 003 703 U1, EP 1 724 101 A1, EP 2 305 428 A1, DE 10 2010 061 148 A1, DE 10 2001 052 967 B4 beschrieben oder entsprechend den vor dem Anmeldetag der vorliegenden Patentanmeldung seitens der Anmelderin vertriebenen Crimphandwerkzeugen mit den Kennzeichnungen CS10, CSV10, CSV10-LWL, CSV10-FFC, AE, CS8, CK100, CS30, CS KTVR, CE/CG, CS150, CS200, CS210, CP600 ausgebildet.

Ein erfindungsgemäßes Schneidwerkzeug kann bspw. eine manuell betätigte Kabelschneidzange sein, gemäß einer der Druckschriften DE 43 03 180 C1, EP 3 159 088 B1 oder EP 3 159 107 A1 ausgebildet sein oder entsprechend einem Schneidwerkzeug, welches zum Anmeldetag der vorliegenden Patentanmeldung von der Anmelderin unter der Kennzeichnung Kabelschneider SH vertrieben wird, ausgebildet sein.

In den letzten Jahren sind Handzangenwerkzeuge zunehmend mit Elektronik-Baueinheiten ausgestattet worden, mittels welchen Zusatzfunktionen (wie bspw. eine Überwachung einer Zangen- oder Crimpkraft und/oder eines Arbeitshubs von Zangenbacken oder auch eine Bewertung einer Durchführung eines Arbeitsvorgangs mit dem Handzangenwerkzeug) bereitgestellt werden sollen. Möglichkeiten für derartige Zusatzfunktionen und die Ausgestaltung der Elektronik-Baueinheit sind insbesondere der Druckschrift EP 3 572 188 A1 zu entnehmen, wobei hier ein mechanisches Zangenteil zur Gewährleistung der Kraftübertragung mit einer daran im Bereich des Zangenkopfes montierten Elektronik-Baueinheit, die in dieser Druckschrift auch als Tech-Pack bezeichnet ist, ausgestattet ist.

Die nicht vorveröffentlichte europäische Patentanmeldung EP 18 207 344.5 offenbart eine Crimpzange, welche eine elektronische Erfassungseinrichtung aufweist, mit der automatisiert ein in eine Zangenbacke eingesetztes Gesenk erkannt werden kann. Des Weiteren offenbart diese Patentanmeldung eine Einbindung der Crimpzange in ein Netzwerk. Das Netzwerk weist dabei neben der Crimpzange einen mit der Crimpzange kommunizierenden Zentralrechner oder ein Smartphone auf, wobei der Zentralrechner oder das Smartphone wiederum mit einem Cloud-Speicher kommunizieren. Über dieses Netzwerk kann eine Dokumentation des Crimpprozesses, insbesondere eines eingegebenen oder erfassten Werkstücks, des automatisch erkannten Gesenks, der Crimpkraft und/oder des Crimpweges erfolgen, und/oder eine Prüfung erfolgen, ob ein Werkstück, welches automatisiert erfasst ist oder von dem Benutzer eingegeben worden ist, mit einem automatisch erkannten Gesenk verpresst werden kann.

DE 10 2005 022 188 A1, die den nächstliegenden Stand der Technik für die vorliegende Erfindung bildet, offenbart einen Bolzenschneider, bei dem zwei Schneidbacken jeweils verschwenkbar über einen Schraubbolzen an einer Verbindungslasche gelagert sind. Der Abstand der Schraubbolzen gibt dabei den Abstand der Schwenkachsen der Schneidbacken des Bolzenschneiders vor. Auf der von den Schneiden der Schneidbacken abgewandten Seite der Verbindungslasche sind Handhebel unter Ausbildung eines Kniehebeltriebs mit einem zwischen den beiden Handhebeln wirkenden Kniehebelgelenk angelenkt, so dass mit einer Verschwenkung der Handhebel eine Öffnungs- und Schließbewegung der Schneidbacken herbeigeführt werden kann. Nahe den inneren Enden der Schneiden ist an die erste Schneidbacke ein konvexer Fortsatz angeformt und an der zweiten Schneidbacke eine konkave Ausnehmung vorgesehen. Mit der Schließbewegung der Schneidbacken wälzt der konvexe Fortsatz der ersten Schneidbacke an der konkaven Ausnehmung der zweiten Schneidbacke ab, wobei sich der Kontaktpunkt zwischen dem Fortsatz und der Ausnehmung in Längsrichtung des Bolzenschneiders verändert. Vorgeschlagen wird in DE 10 2005 022 188 A1 auch, dass der konvexe Fortsatz eine Außenverzahnung aufweisen kann, die dann abwälzt an einer Innenverzahnung der konkaven Ausnehmung.

Eine Zange mit entsprechenden aneinander abwälzenden Verzahnungen, hier allerdings der Handhebel, offenbart US 2011/0214538 A1.

Die Druckschrift DE 28 54 633 A1 offenbart eine scherenartige Zange, bei der die beiden Scherenteile jeweils einstückig einen Handhebel und eine Zangenbacke ausbilden und über ein Scherengelenk miteinander verbunden sind. Das Scherengelenk verfügt über einen Schwenkbolzen, der randgeschlossene Lageraugen der beiden Scherenteile durchsetzt. Zwischen den beiden Scherenteilen wirkt ein Zwangsgesperre, welches so ausgebildet und an die beiden Handhebeln der Scherenteile angelenkt ist, dass das Zwangsgesperre eine einmal herbeigeführte teilweise Schließstellung sichern kann. Um eine Einstellung des Wirkungsbereichs des Zwangsgesperres und der hierdurch gesicherten Schließstellung zu ermöglichen, wird eine Einstelleinrichtung vorgeschlagen, über welche das Zwangsgesperre an unterschiedlichen Stellen eines Handhebels angelenkt werden kann. Für eine Ausführungsform der Verstelleinrichtung verfügt der Handhebel über gegenüber der Längserstreckung des Handgriffs nach vorne geneigte Schlitze, in die für die unterschiedlichen Einstellungen jeweils ein von dem Endbereich des Zwangsgesperres getragener Stift eingesetzt werden kann.

### AUFGABE DER ERFINDUNG

Der Erfindung liegt die Aufgabe zugrunde, ein Handzangenwerkzeug vorzuschlagen, welches hinsichtlich der Zahl der benötigten Bauelemente und/oder einer Montage und/oder Demontage verbessert ist. Des Weiteren liegt der Erfindung die Aufgabe zugrunde, ein entsprechend verbessertes Verfahren zur Montage eines Handzangenwerkzeugs vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft ein Handzangenwerkzeug, welches über Handhebel und Zangenbacken verfügt. Die Handhebel und die Zangenbacken sind über einen Antriebsmechanismus miteinander derart gekoppelt, dass über eine Bewegung der Handhebel eine Bewegung der Zangenbacken über einen Arbeitshub herbeigeführt werden kann, wobei vorzugsweise mittels des Antriebsmechanismus auch eine geeignete Übersetzung der auf die Handhebel applizierten Kräfte der Hand des Benutzers erfolgt. Um lediglich ein die Erfindung nicht beschränkendes Beispiel zu nennen, kann der Antriebsmechanismus einen Kniehebeltrieb aufweisen.

Der erfindungsgemäße Antriebsmechanismus weist Antriebselemente auf, bei denen es sich für das genannte Beispiel eines Kniehebeltriebs um die Kniehebel handeln kann.

In dem erfindungsgemäßen Handzangenwerkzeug sind zwei Zangenschwenkteile (bei denen es sich um einen Handhebel, eine Zangenbacke und/oder ein Antriebselement handeln kann) über ein Schwenklager verschwenkbar miteinander verbunden, wobei diese Verschwenkung um eine von dem Schwenklager vorgegebene Schwenkachse während des Arbeitshubs des Handzangenwerkzeugs erfolgt. Somit korreliert eine Verschwenkung der Zangenschwenkteile um die Schwenkachse des Schwenklagers entsprechend der von dem Antriebsmechanismus vorgegebenen Kinematik mit einer Verschwenkung der Zangenbacken und der Handhebel zueinander.

Für die aus dem Stand der Technik bekannten Ausführungsformen erfolgt üblicherweise die Bereitstellung eines Schwenklagers zwischen zwei Zangenschwenkteilen über einen Schwenkbolzen, der sich durch fluchtende Lagerbohrungen der Zangenschwenkteile erstreckt und axial gesichert sein kann durch einen Absatz des Schwenkbolzens, Sicherungsringe, Sprengringe u. ä. Dies hat aber zur Folge, dass zur Bildung des Schwenklagers (neben den zu verbindenden Zangenschwenkteilen und deren Bohrungen) der Schwenkbolzen und mindestens ein zusätzliches Sicherungselement erforderlich sind, womit die Bauteilvielzahl erhöht wird. Des Weiteren sind für eine Montage des Schwenklagers zunächst die beiden Zangenschwenkteile exakt so zueinander auszurichten, dass die Lagerbohrungen der Zangenschwenkteile miteinander fluchten. Dann ist der Lagerbolzen in die fluchtenden Lagerbohrungen einzustecken und es sind die zusätzlichen Sicherungsmaßnahmen zu treffen, womit die Montage verhältnismäßig aufwändig ist.

Die Erfindung schlägt einen anderen Weg zur Bildung des Schwenklagers vor: Erfindungsgemäß weist ein erstes Zangenschwenkteil ein Lagerauge auf. Dieses Lagerauge ist aber nicht randgeschlossen, wie dies für eine Lagerbohrung der Fall ist. Vielmehr weist das Lagerauge eine Randöffnung auf, was bedeutet, dass das Lagerauge in einem Querschnitt nicht eine umlaufende geschlossene Innenkontur aufweist, sondern eine über die Randöffnung offene Innenkontur. Das zweite Zangenschwenkteil verfügt über einen Lagerzapfen. Dieser Lagerzapfen ist über die Randöffnung in das Lagerauge einsetzbar. In diesem in das Lagerauge eingesetzten Zustand des Lagerzapfens ist der Lagerzapfen dann verschwenkbar in dem Lagerauge gelagert, womit das Schwenklager gebildet ist. Erfindungsgemäß kann das Einsetzen eines zusätzlichen Schwenkbolzens in ein Lagerauge des ersten Zangenschwenkteils entbehrlich sein und/oder es erübrigt sich unter Umständen der Einsatz und die Montage mindestens eines zusätzlichen Sicherungselements.

Für einen ersten Vorschlag der Erfindung weist der Lagerzapfen des zweiten Zangenschwenkteils eine Mantelfläche mit zwei unterschiedlichen Mantelflächenbereichen auf: In einem ersten Mantelflächenbereich ist die Quererstreckung größer als die Quererstreckung der Randöffnung. Hingegen ist in einem zweiten Mantelflächenbereich die Quererstreckung kleiner als die Quererstreckung der Randöffnung. Dies hat zur Folge, dass bei Ausrichtung des Lagerzapfens so, dass die Quererstreckung des ersten Mantelflächenbereichs in Richtung der Quererstreckung der Randöffnung des ersten Zangenschwenkteils orientiert ist, ein Eintritt des Lagerzapfens in die Randöffnung des Lagerauges des ersten Zangenschwenkteils nicht möglich ist und auch ein Austritt aus dem Lagerauge durch die Randöffnung nicht möglich ist. Ist hingegen der zweite Mantelflächenbereich mit seiner Quererstreckung parallel zu der Quererstreckung der Randöffnung orientiert, kann ein Eintritt des Lagerzapfens durch die Randöffnung in das Lagerauge erfolgen und auch eine Demontage durch die Randöffnung erfolgen. Ist beispielsweise der Lagerzapfen grundsätzlich zylindrisch ausgebildet und verfügt die zylindrische Mantelfläche über eine Abflachung, kann eine Montage oder Demontage des Lagerzapfens hinsichtlich des Lagerauges mit der Randöffnung erfolgen, wenn der Lagerzapfen so orientiert ist, dass dessen Quererstreckung infolge der Abflachung reduziert ist. Vorzugsweise befindet sich zur Vermeidung eines unerwünschten Lösens der Verbindung zwischen dem Lagerzapfen und dem Lagerauge mit der Randöffnung das vollständig montierte Handzangenwerkzeug über den gesamten Arbeitshubs des Handzangenwerkzeugs nicht in einer Ausrichtung des Lagerzapfens gegenüber dem Lagerauge, in welcher die Quererstreckung des zweiten Mantelflächenbereichs mit der Quererstreckung der Randöffnung des ersten Zangenschwenkteils übereinstimmt.

Die Erfindung umfasst Ausführungsformen, bei denen das Schwenklager ausschließlich zwischen dem einen Lagerzapfen und dem Lagerauge mit der Randöffnung gebildet ist. Möglich ist auch, dass (beispielsweise beidseitig von einem Grundkörper des Zangenschwenkteils) jeweils ein Lagerzapfen gebildet ist, wobei dann die beiden Lagerzapfen jeweils Aufnahme finden können in einem zugeordneten randoffenen Lagerauge des anderen Zangenschwenkteils. Hierdurch kann die Abstützfläche vergrößert und die Schwenkführung der Zangenschwenkteile unter Umständen verbessert werden und es kann eine symmetrische Abstützung des Grundkörpers auf beiden Seiten desselben erfolgen.

Für einen zweiten Vorschlag der Erfindung weist das erste Zangenschwenkteil das Lagerauge mit der Randöffnung auf. Zusätzlich verfügt das erste Zangenschwenkteil über ein weiteres randgeschlossenes Lagerauge, wobei die beiden Lageraugen fluchtend zueinander angeordnet sind. Das zweite Zangenschwenkteil verfügt über den bereits erläuterten Lagerzapfen und einen weiteren Lagerzapfen. In diesem Fall ist ein Grundkörper des zweiten Zangenschwenkteils zwischen dem Lagerzapfen und dem weiteren Lagerzapfen angeordnet. Die beiden Lagerzapfen sind dabei fluchtend zueinander angeordnet und orientiert. Für diese Ausgestaltung der Erfindung ist ein Lagerzapfen in dem Lagerauge mit der Randöffnung angeordnet, während der andere Lagerzapfen in dem randgeschlossenen Lagerauge angeordnet ist. Hierdurch kann die Festigkeit des gebildeten Schwenklagers und die Führung des Schwenklagers weiter verbessert werden. Hierbei sind die Lagerflächen des randgeschlossenen Lagerauges besonders mechanisch steif und bestandsfähig ausgebildet, da sich das Material des Zangenschwenkteils vollständig in Umfangsrichtung um das Lagerauge herum erstreckt. Des Weiteren gewährleistet das randgeschlossene Lagerauge, dass kein Austritt des zugeordneten Lagerzapfens in eine beliebige Richtung in der Schwenkebene aus dem Lagerauge möglich ist. Vielmehr kann dieser Lagerzapfen lediglich mit einer Fügerichtung entlang der Schwenkachse des Lagerauges in das randgeschlossene Lagerauge eingesetzt und aus diesem entnommen werden. Hingegen stellt das Lagerauge mit der Randöffnung eine zusätzliche Schwenklagerung bereit, welche aber gegenüber der erstgenannten Schwenklagerung eine reduzierte Funktionalität aufweisen kann.

Für die Geometrie des ersten Zangenschwenkteils und insbesondere die Geometrie desselben im Bereich des mindestens einen Lagerauges gibt es im Rahmen der Erfindung vielfältige Möglichkeiten. So kann das Zangenschwenkteil mit einer oder mehreren Platten oder einem beliebigen Formkörper ausgebildet sein. Für den zweiten Vorschlag der Erfindung weist das erste Zangenschwenkteil (im Bereich der von diesem ausgebildeten Lageraugen) zwei parallel zueinander orientierte und beabstandete Wangen auf. In einer ersten Wange ist dann das Lagerauge mit der Randöffnung ausgebildet, während in der anderen zweiten Wange ein weiteres, unter Umständen ebenfalls eine Randöffnung aufweisendes Lagerauge oder das zuvor genannte weitere randgeschlossene Lagerauge ausgebildet sein.

Für einen besonderen Vorschlag der Erfindung weist die erste Wange des ersten Zangenschwenkteils einen Einführschlitz auf, der in die Randöffnung des Lagerauges mündet, oder lediglich eine Randöffnung auf. Für diesen Vorschlag verfügt der Grundkörper des zweiten Zangenschwenkteils über einen Abschnitt, der während der Montage in einer Montage-Winkelstellung im Bereich des Einführschlitzes und/oder der Randöffnung angeordnet ist. Erfindungsgemäß ist der genannte Abschnitt kleiner ausgebildet als der Einführschlitz und/oder die Randöffnung. Darüber hinaus weist dieser Abschnitt des Grundkörpers des zweiten Zangenschwenkteils eine Dicke auf, die kleiner ist als der Abstand der beiden Wangen. Diese Gestaltung hat zur Folge, dass für eine Montage, bei der die Zangenschwenkteile in die Montage-Winkelstellung gebracht werden und aneinander angenähert werden in Richtung der Schwenkachse, ein Lagerzapfen in das randgeschlossene Lagerauge eintreten kann, während gleichzeitig der genannte Abschnitt des Grundkörpers des zweiten Zangenschwenkteils durch den Einführschlitz und/oder die Randöffnung hindurchtreten kann bis in eine Montagestellung, in welcher der Abschnitt zur Anlage an die zweite Wange kommt. Wird dann der relative Winkel der Zangenschwenkteile um die Schwenkachse von der Montage-Winkelstellung in eine Betriebs-Winkelstellung verändert, ist der genannte Abschnitt zwischen den beiden Wangen gefangen in eine Richtung, die der Orientierung der Schwenkachse entspricht. Hierbei ist die Montage-Winkelstellung eine Winkelstellung, die nur für die Montage eingenommen werden kann, während diese für das Durchlaufen des Arbeitshubs nicht erreicht werden kann.

Die beiden Wangen können von Streben oder auch einem einstückigen Körper mit einer beliebigen Geometrie ausgebildet werden.

Die Erfindung umfasst auch Ausgestaltungen, bei denen das Zangenschwenkteil einen Grundkörper und mindestens einen Lagerzapfen aufweist. Hierbei dient der Grundkörper insbesondere der Kraftübertragung oder einer Abstützung in dem Antriebsmechanismus von oder zu dem Schwenklager, während der Lagerzapfen zur Bildung des Schwenklagers und damit der Gewährleistung des Schwenk-Freiheitsgrads zwischen den beiden Zangenschwenkteilen dient. Hierbei kann der Lagerzapfen als Lagerbolzen separat von dem Grundkörper ausgebildet sein, womit dieser beispielsweise über eine Presspassung in eine Bohrung des Grundkörpers eingesetzt sein kann oder auf beliebige andere bekannte Weise mit dem Grundkörper verbunden und an diesem gesichert sein kann. Die Erfindung schlägt aber vorzugsweise vor, dass der Lagerzapfen einstückig mit dem Grundkörper verbunden ist. Hierdurch kann die Bauteilvielfalt weiter verringert werden und es kann auch der Montageaufwand verringert werden. Unter Umständen ergibt sich bei der einstückigen Ausgestaltung auch einer vergrößerte Steifigkeit und es kann ein etwaiges Spiel zumindest reduziert werden.

Vorzugsweise verfügt das erste Zangenschwenkteil im Bereich der vorgenannten Wangen über einen U-förmigen Querschnitt, wobei in diesem Fall die beiden Seitenschenkel des U jeweils eine Wange ausbilden.

Für die erfindungsgemäßen Ausführungsformen des Handzangenwerkzeugs erfolgt die Vermeidung eines Austritts eines Lagerzapfens des zweiten Zangenschwenkteils aus einem Lagerauge mit Randöffnung des ersten Zangenschwenkteils durch eine Art Formschluss wie folgt: Erfindungsgemäß ist der Lagerzapfen des zweiten Zangenschwenkteils ausschließlich in einer spezifischen Winkelstellung (die zuvor als Montage-Winkelstellung bezeichnet worden ist) oder einem spezifischen Winkelbereich für den Relativwinkel der Zangenschwenkteile in die Randöffnung des Lagerauges des ersten Zangenschwenkteils einsetzbar. Mit vollständig montiertem Handzangenwerkzeug kann dann infolge der Wechselwirkung der weiteren Zangenschwenkteile diese spezifische Winkelstellung oder ein spezifischer Winkelbereich nicht erreicht werden. Das Lösen des Lagerzapfens des zweiten Zangenschwenkteils durch die Randöffnung des Lagerauges des ersten Zangenschwenkteils ist somit für vollständig montiertes Handzangenwerkzeug nicht möglich. Vielmehr sind zunächst weitere Zangenschwenkteile, die unter Umständen über spezifische Sicherungseinrichtungen gesichert sind, zu demontieren, bevor die spezifische Winkelstellung oder der spezifische Winkelstellungsbereich wiederhergestellt werden kann und der Lagerzapfen des zweiten Zangenschwenkteils durch die Randöffnung aus dem Lagerauge des ersten Zangenschwenkteils demontiert werden kann.

Für die Wahl der Handzangenteile, die wie zuvor miteinander verbunden sein können, gibt es im Rahmen der Erfindung vielfältige Möglichkeiten. Um lediglich einige, die Erfindung nicht beschränkende Beispiele zu nennen, kann es sich bei einem der beiden Zangenschwenkteile um einen Handhebel handeln, während es sich bei dem anderen Zangenschwenkteil um eine Zangenbacke handeln kann. Alternativ oder kumulativ möglich ist eine erfindungsgemäße Verbindung eines Handhebels mit einem Druckhebel, wobei alternativ oder zusätzlich auch möglich ist, dass über die erfindungsgemäße Verbindung ein Schwenklager zwischen einen Handhebel und einer Sperrklinke eines Zwangsgesperres gebildet ist. Hierbei dient ein Zwangsgesperre einer Sicherung eines einmal herbeigeführten Arbeitsteilhubs gegenüber einer unerwünschten Öffnung des Handzangenwerkzeugs auch bei temporärer Beseitigung der auf die Handhebel applizierten Betätigungskraft und der Gewährleistung des vollständigen Durchlaufens des Arbeitshubs.

Die über ein erfindungsgemäß gebildetes Schwenklager miteinander verbundenen Zangenschwenkteile können eine beliebige Funktion in dem Handzangenwerkzeug und/oder eine beliebige Geometrie aufweisen. Auch ein Einsatz eines beliebigen Materials, insbesondere eines metallischen Materials wie Aluminium oder Stahl, ist möglich. Für einen weiteren Vorschlag der Erfindung kann mindestens ein Zangenschwenkteil mit Kunststoff hergestellt sein, wovon umfasst ist, dass dieses vollständig aus Kunststoff besteht oder ein Verbundwerkstoff mit Kunststoff Einsatz findet, ein faserverstärkter Kunststoff wie beispielsweise ein glasfaserverstärkter Kunststoff (auch abgekürzt als GFK) (vgl. den Eintrag unter "Glasfaserverstärkter Kunststoff" auf der Website Wikipedia vom 19.11.2019 hinsichtlich einsetzbarer Kunststoffmaterialien und Faserwerkstoffe, der Längen und Ausrichtung von Fasern, dem Einsatz von Geweben, Gelegen, Rovings oder unidirektionalen Geweben oder Gelegen u. ä.).

Alternativ oder zusätzlich schlägt die Erfindung vor, dass mindestens ein Zangenschwenkteil in einem MIM-Verfahren hergestellt ist. Unter einem MIM-Verfahren wird ein Metallpulverspritzgießverfahren verstanden, wobei hinsichtlich der Durchführung des Herstellungsverfahrens, der einsetzbaren Materialien und der Anforderungen an die Geometriegestaltungen des herzustellenden Werkstücks auf den Eintrag "Metallpulverspritzguss" auf der Website Wikipedia mit dem Datum der Einsichtnahme 19.11.2019 verwiesen wird.

Grundsätzlich kann das erfindungsgemäße Handzangenwerkzeug beliebigen Zwecken dienen und für den Einsatzzweck hinsichtlich seiner Gestaltung angepasst sein. Vorzugsweise handelt es sich bei dem erfindungsgemäßen Handzangenwerkzeug um eine Crimpzange, eine Schneidzange oder eine Rohrpresszange.

Eine besondere Ausführungsform der Erfindung schlägt vor, dass am Ende der Montage des Handzangenwerkzeugs zwei Zangenschwenkteile durch ein Schwenklager verschwenkbar miteinander verbunden werden, bei dem sich ein Lagerbolzen durch randgeschlossene Lageraugen der beiden Zangenschwenkteile erstreckt und in dieser montierten Stellung des Lagerbolzens eine axiale Sicherung desselben über zusätzliche Sicherungselemente wie Absätze und Sicherungsringe erfolgt. Es kann aber auch kein Sicherungselement zur Anwendung kommen, wenn der Lagerbolzen in eine Presspassung der Lagerbohrung eine Zangenschwenkteils eingesetzt oder eingepresst ist. Sämtliche weiteren Zangenschwenkteile sind für diese besondere Ausführungsform ausschließlich über Schwenklager miteinander verbunden, bei denen eine Aufnahme von Lagerzapfen in randoffenen Lageraugen erfolgt. Während grundsätzlich auch ein Austritt der Lagerzapfen aus den randoffenen Lageraugen möglich wäre, ist dieser unterbunden durch die Montage des Lagerbolzens mit den beiden randgeschlossenen Lageraugen der beiden Zangenschwenkteile, da mit dieser Montage vermieden wird, dass die weiteren Zangenschwenkteile ihre Relativstellung zueinander erreichen, in welcher ein Austritt der Lagerzapfen aus den Randöffnungen der Lageraugen überhaupt möglich ist. Die Montage eines derartigen Handzangenwerkzeugs ist signifikant vereinfacht, da zunächst die unterschiedlichen Zangenschwenkteile lediglich "ineinander gesteckt" werden müssen mit Eintritt der Lagerzapfen in die Randöffnungen der Lageraugen und ein Abschluss der Montage und damit eine verliersichere Verbindung sämtlicher Zangenschwenkteile durch die Montage eines einzigen Lagerbolzens mit den randgeschlossenen Lageraugen der letzten beiden Zangenschwenkteile gewährleistet werden kann. Beispielsweise handelt es sich bei den letzten Zangenschwenkteilen, die die randgeschlossenen Lageraugen aufweisen und über den Lagerbolzen verschwenkbar miteinander verbunden werden, um die beiden Zangenbacken oder ein festes, eine Zangenbacke ausbildendes Zangenteil und die andere bewegliche Zangenbacke.

Ein weiterer Vorschlag der Erfindung widmet sich einer (weiteren) Reduzierung der Zahl der Bauelemente des Handzangenwerkzeugs und der durchzuführenden Montageschritte. Die Erfindung schlägt eine Ausführungsform vor, in welcher eine mechanische Zangen-Teilbaugruppe vorhanden ist. Diese Zangen-Teilbaugruppe ist derart definiert, dass diese sämtliche Bauelemente beinhaltet, die zur Übertragung der von dem Benutzer auf die Handhebel aufgebrachten Handkraft zu den Zangenbacken erforderlich sind. Somit umfasst die Zangen-Teilbaugruppe insbesondere die Handhebel und Zangenbacken selbst sowie die zwischen diese zwischengeschalteten Antriebselemente des Antriebsmechanismus, während die nicht für die Übertragung der Kräfte zwischen den Handhebeln und den Zangenbacken dienenden weiteren Bauelemente nicht Teil der mechanischen Zangen-Teilbaugruppe sind. Die Erfindung schlägt in diesem Fall vor, dass die mechanische Zangen-Teilbaugruppe lediglich einen Lagerbolzen (sowie etwaige für die Sicherung des Lagerbolzens erforderlichen Bauelemente, die bei Aufnahme des Lagerbolzens über eine Presspassung entbehrlich sind) und maximal vier weitere Bauelemente aufweist. Hierbei handelt es sich bei den Bauelementen um starre Bauteile, die ein- oder mehrteilig ausgebildet sein können. Um lediglich ein die Erfindung nicht beschränkendes Beispiel zu nennen, kann es sich bei den vier weiteren Bauelementen um
- ein festes Zangenteil, welches einen festen Handhebel und eine feste Zangenbacke ausbildet,
- einem beweglichen Handhebel,
- eine bewegliche Zangenbacke und
- einen Druckhebel
handeln. Durchaus möglich ist, dass das Handzangenwerkzeug zusätzliche Bauelemente, die nicht Bestandteil der mechanischen Zangen-Teilbaugruppe sind, aufweisen kann. Beispielsweise können zusätzlich Öffnungs- und Schließfedern, Griffschalen, Bauelemente eines Zwangsgesperres u. ä. vorgesehen sein. Möglich ist auch, dass zusätzlich eine Elektronik-Baueinheit vorhanden ist, wie diese aus der europäischen Patentanmeldung EP 3 572 188 A1 bekannt ist.

Eine weitere Lösung der der Erfindung zugrunde liegenden Aufgabe ist gegeben durch ein Verfahren zur Montage eines Handzangenwerkzeugs der zuvor erläuterten Art. Für dieses Verfahren erfolgt in einem ersten Verfahrensschritt eine Montage eines ersten Schwenklagers zwischen einem Druckhebel und einem festen Zangenteil. Das feste Zangenteil bildet dabei eine feste Zangenbacke und einen festen Handhebel aus. Diese Montage des ersten Schwenklagers erfolgt durch das Einführen eines Lagerzapfens in ein randoffenes Lagerauge. Hierbei kann der Lagerzapfen an dem Druckhebel oder dem festen Zangenteil angeordnet sein, womit dann das randoffene Lagerauge an dem anderen von dem Druckhebel und dem festen Zangenteil angeordnet ist. Hieran anschließend wird ein zweites Schwenklager montiert, nämlich ein Schwenklager zwischen einem beweglichen Handhebel und einer beweglichen Zangenbacke. Auch die Montage dieses zweiten Schwenklagers erfolgt durch Einführen eines Lagerzapfens in ein randoffenes Lagerauge. Auch hier kann der Lagerzapfen entweder an dem beweglichen Handhebel oder an der beweglichen Zangenbacke vorgesehen sein, während dann das Lagerauge an dem anderen von dem beweglichen Handhebel und der beweglichen Zangenbacke angeordnet ist. Hieran anschließend erfolgt die Montage eines dritten Schwenklagers zwischen dem Druckhebel und dem beweglichen Handhebel, was durch Einführen eines Lagerzapfens in ein randoffenes Lagerauge erfolgt. Auch hier kann der Lagerzapfen an dem Druckhebel oder dem beweglichen Handhebel angeordnet sein, womit dann das Lagerauge an dem anderen von dem Druckhebel und dem beweglichen Handhebel angeordnet ist. Schließlich erfolgt die Montage eines vierten Schwenklagers zwischen der beweglichen Zangenbacke und dem festen Zangenteil. Dies erfolgt durch Einstecken eines Lagerbolzens in randgeschlossene Lagerbohrungen der beweglichen Zangenbacke und des festen Zangenteils. Es erfolgt dann eine Sicherung des Lagerbolzens gegenüber einem Wiederaustritt aus den Lagerbohrungen. Mit der Montage des vierten Schwenklagerung und dessen Sicherung sind auch das erste, zweite und dritte Schwenklager gegenüber einem unerwünschten Wiederaustritt des jeweiligen Lagerzapfens aus dem zugeordneten Lagerauge gesichert.

Für eine Weiterbildung des erfindungsgemäßen Verfahrens wird ein Federfußpunkt einer Öffnungsfeder des Handzangenwerkzeugs mit dem festen Zangenteil verbunden, was vorzugsweise zwischen der Montage des ersten und zweiten Schwenklagers erfolgt. Des Weiteren wird in diesem Verfahren die Öffnungsfeder mit dem anderen Federfußpunkt mit der festen Zangenbacke verbunden, was vorzugsweise vor, mit oder nach der Montage des dritten Schwenklagers (aber u. U. nach der Montage des zweiten Schwenklagers und vor der Montage des vierten Schwenklagers) erfolgt.

Für eine andere oder zusätzliche Weiterbildung des erfindungsgemäßen Verfahrens wird (beispielsweise zwischen dem Herstellen der ersten und zweiten Schwenkverbindung) ein Schwenklager eines Sperrelements eines Zwangsgesperres mit dem beweglichen Handhebel montiert, indem ein Lagerfortsatz des Sperrelements in ein randoffenes Lagerauge des beweglichen Handhebels eingesetzt wird.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt Bauelemente eines Handzangenwerkzeugs in einer räumlichen Explosionsdarstellung.
- **Fig. 2 bis 5**: zeigen Bauelemente des Handzangenwerkzeugs gemäß Fig. 1 in räumlichen Einzelteildarstellungen, nämlich ein festes Zangenteil (Fig. 2), einen Druckhebel (Fig. 3), einen beweglichen Handhebel (Fig. 4) und eine bewegliche Zangenbacke (Fig. 5).
- **Fig. 6**: zeigt schematisch ein Verfahren zur Montage eines Zangenwerkzeugs.
- **Fig. 7 bis 12**: zeigen eine Montage eines Handzangenwerkzeugs mit einer sukzessiven Montage mehrerer Bauelemente desselben miteinander in Seitenansichten.

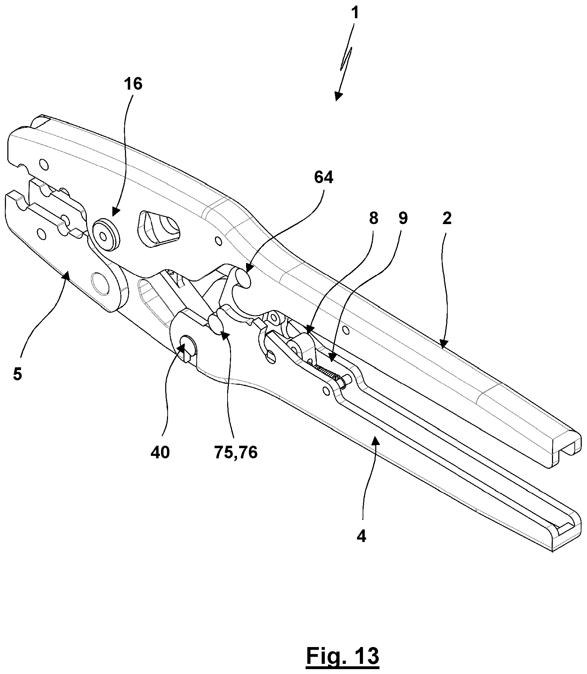

- **Fig. 13**: zeigt das montierte Handzangenwerkzeug in einer räumlichen Darstellung.
- **Fig. 14**: zeigt das montierte Handzangenwerkzeug in einem Längsschnitt.

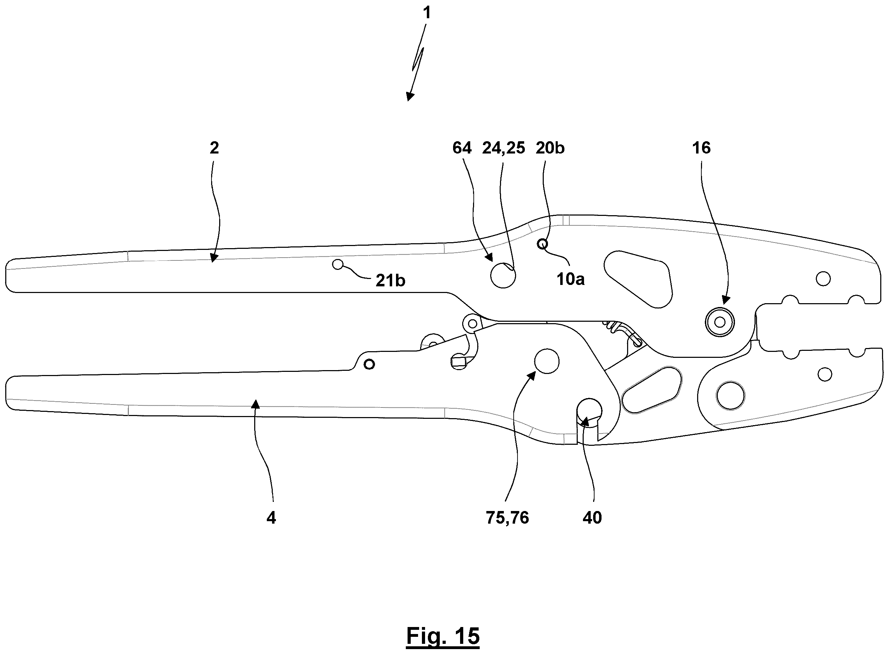

- **Fig. 15**: zeigt das montierte Handzangenwerkzeug in einer rückseitigen Ansicht.

### FIGURENBESCHREIBUNG

In den Figuren sind teilweise Bauelemente, die dieselbe oder eine vergleichbare Funktion aufweisen, mit denselben Bezugsnummern gekennzeichnet, wobei diese dann teilweise durch den ergänzenden Buchstaben a, b, ... voneinander unterschieden sein können. Auf diese Bauelemente wird dann in der Beschreibung und in den Patentansprüchen teilweise auch Bezug genommen mit Verwendung der Bezugsnummer ohne den ergänzenden Buchstaben, womit dann eines dieser Bauelemente, mehrere dieser Bauelemente oder sämtliche dieser Bauelemente gemeint sein können.

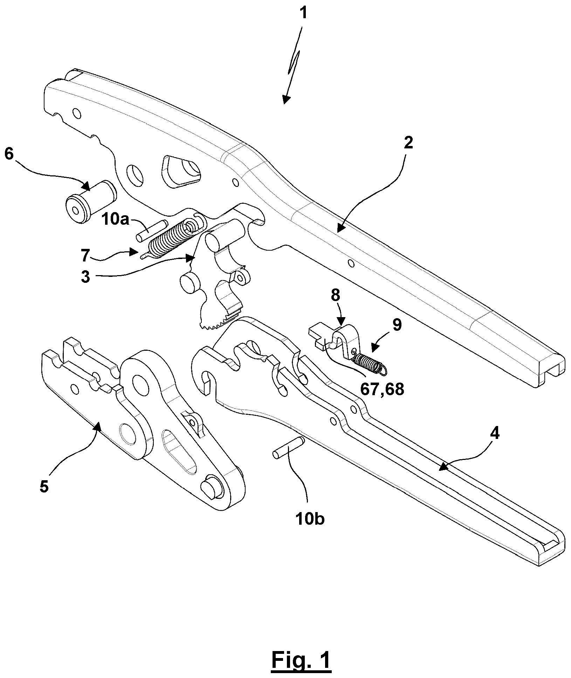

**Fig. 1** zeigt in einer räumlichen Explosionsdarstellung ein Handzangenwerkzeug 1. Unter einem Handzangenwerkzeug wird ein über Handhebel manuell betätigtes Werkzeug verstanden, bei welchem Zangenbacken mit einem Werkstück zum Schneiden, Pressen oder Crimpen in Wechselwirkung treten. Hierbei erfolgt vorzugsweise eine Verschwenkung der Handhebel über den Arbeitshub, während die Zangenbacken (wie für die hier dargestellten Ausführungsbeispiele) über den Arbeitshub relativ zueinander verschwenkt werden können oder auch translatorisch relativ zueinander bewegt sein können, vgl. insbesondere die Crimpzangen mit der Kennzeichnung "CS10" oder "CSV10" der Anmelderin. Grundsätzlich kann das Handzangenwerkzeug 1 eine beliebige Bauform aufweisen, vgl. auch die unterschiedlichen Bauformen gemäß dem eingangs genannten Stand der Technik.

Gemäß Fig. 1 verfügt das Handzangenwerkzeug 1 über ein festes Zangenteil 2, einen Druckhebel 3, einen beweglichen Handhebel 4, eine bewegliche Zangenbacke 5, einen Lagerbolzen 6, eine Öffnungsfeder 7, ein Sperrelement 8 eines Zwangsgesperres, eine Sperrfeder 9 des Zwangsgesperres und Bolzen 10a, 10b.

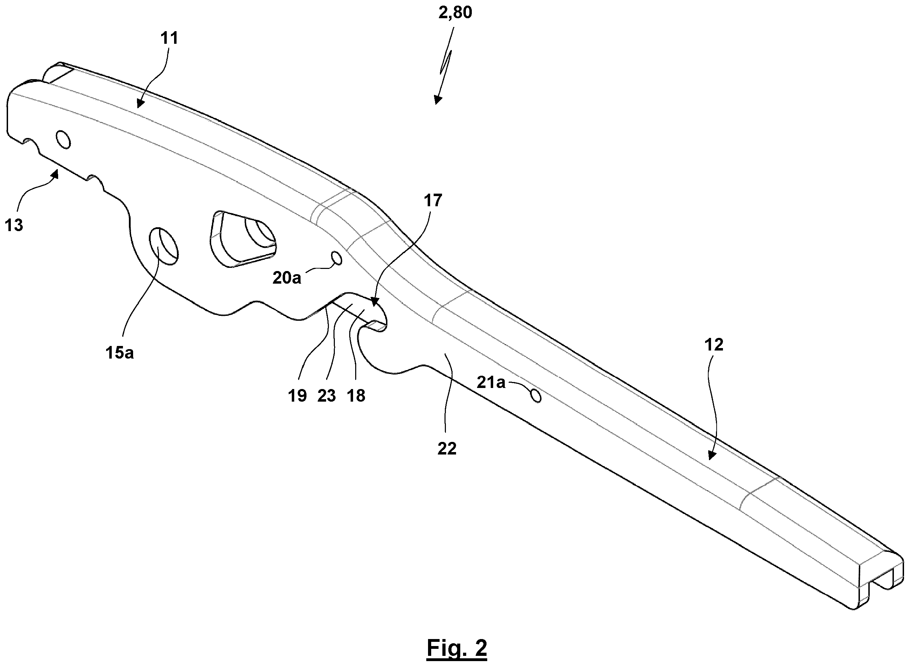

**Fig. 2** zeigt das feste Zangenteil 2 in einer räumlichen Einzelteildarstellung. Das feste Zangenteil 2 bildet eine feste Zangenbacke 11 sowie einen festen Handhebel 12 aus, die hier einstückig miteinander verbunden sind.

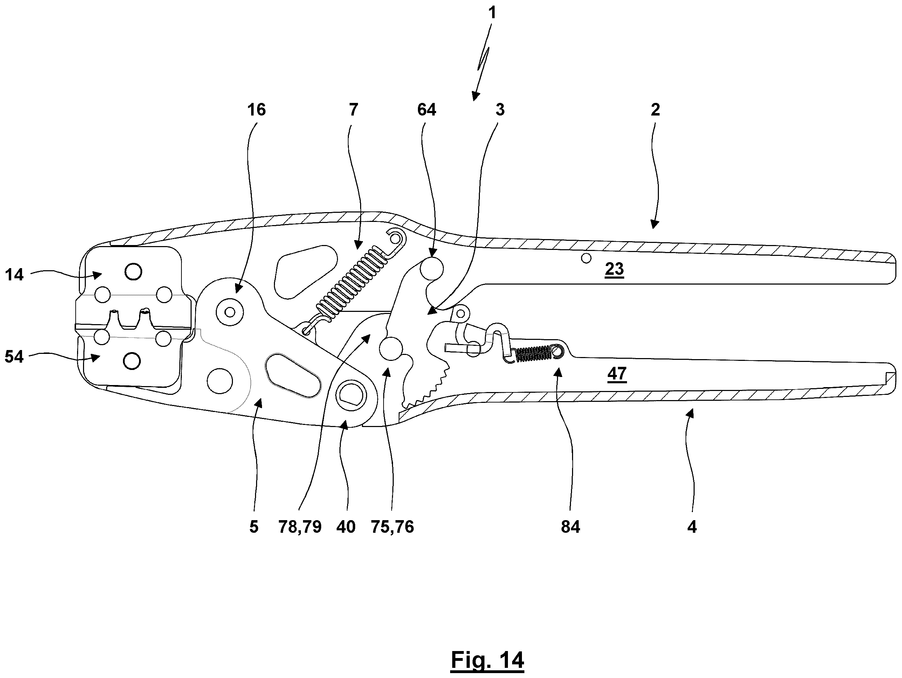

Die feste Zangenbacke 11 bildet eine Gesenkaufnahme 13 aus, in welcher eine Gesenkhälfte 14 (vgl. Fig. 14) aufgenommen und auswechselbar gehalten werden kann. Hinsichtlich der Ausgestaltung der Gesenkaufnahme 13 und der Gesenkhälfte 14 wird insbesondere auf die Druckschrift DE 19 802 287 C1 verwiesen, die diesbezüglich zum Gegenstand der Offenbarung der vorliegenden Patentanmeldung gemacht wird. Des Weiteren verfügt das feste Zangenteil 2 über eine Lagerbohrung 15. In montiertem Zustand des Handzangenwerkzeugs erstreckt sich der Lagerbolzen 6 zur Bildung eines Schwenklagers 16 für die verschwenkbare Lagerung der Zangenbacken 5, 11 aneinander durch die Lagerbohrung 15.

Zwischen dem Handhebel 12 und der Zangenbacke 11 verfügt der feste Zangenteil 2 über ein Lagerauge 17 mit einer Randöffnung 18, in die und das ein Einführschlitz 19 mündet.

Des Weiteren verfügt das feste Zangenteil 2 über Bohrungen 20, 21, wobei in die Bohrung 20 der Bolzen 10a, beispielsweise mit einer Presspassung, einsetzbar ist. An dem Bolzen 10a kann ein Federfußpunkt der Öffnungsfeder 7 eingehängt werden.

Für das dargestellte Ausführungsbeispiel verfügt das feste Zangenteil 2 zumindest über einen Großteil der Längserstreckung über einen U-förmigen Querschnitt, wobei die beiden Seitenschenkel des U sich parallel zueinander erstreckende und beabstandet voneinander angeordnete Wangen 22, 23 ausbilden. Die U-förmige Gestaltung des festen Zangenteils 2 hat eine Erhöhung der Steifigkeit, des Flächenträgheitsmoments und des Widerstandsmoments des festen Zangenteils 2 zur Folge. Darüber hinaus stellen die Wangen 22, 23 des festen Zangenteils 2 zwei beabstandete Abstützstellen für an dem festen Zangenteil 2 gehaltene Bauelemente bereit:
Die Gesenkaufnahme 13 nimmt zwischen den beiden Wangen 22, 23 einen Flansch einer Gesenkhälfte auf. Querbolzen der Gesenkhälfte können dann in den dargestellten halbzylinderförmigen Anlageflächen der Wangen 22, 23 an der festen Zangenbacke 11 abgestützt sein.

Die beiden Wangen 22, 23 stellen zwei zueinander fluchtende Lagerbohrungen 15a, 15b für die Aufnahme des Lagerbolzens 6 bereit. Entsprechend erfolgt auch mittels der Wangen 22, 23 die Bereitstellung von fluchtenden Bohrungen 20a, 20b bzw. 21a, 21b. Für das dargestellte Ausführungsbeispiel ist das die Randöffnung 18 und den Einführschlitz 19 aufweisende Lagerauge 17 lediglich in der Wange 22 vorgesehen. Hingegen verfügt die Wange 23 über ein mit dem Lagerauge 17 fluchtendes Lagerauge 24, welches keine Randöffnung 18 aufweist. Vorzugsweise ist das Lagerauge 24 in der Wange 23 als Bohrung 25 ausgebildet.

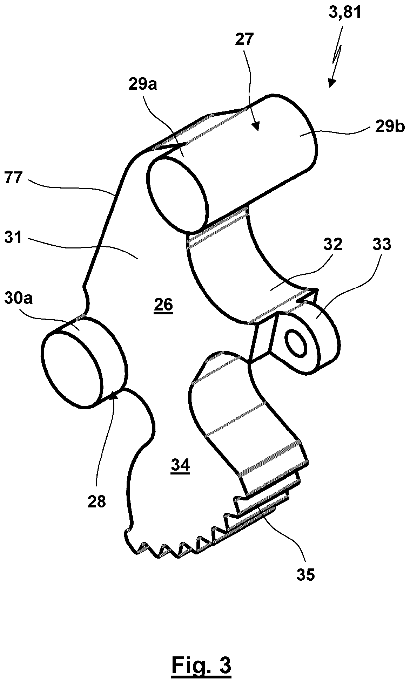

**Fig. 3** zeigt in einer räumlichen Einzeldarstellung den Druckhebel 3. Der Druckhebel 3 verfügt über einen Grundkörper 26 und zwei einstückig mit dem Grundkörper 26 verbundene Lagerzapfenkörper 27, 28. Der Lagerzapfenkörper 27 weist sich beidseits des Grundkörpers 26 erstreckende Lagerzapfen 29a, 29b auf. Entsprechend erstrecken sich beidseits des Grundkörpers 26 Lagerzapfen 30a, 30b des Lagerzapfenkörpers 28. Der Verbindungsbereich zwischen den Lagerzapfenkörpern 27, 28, der von dem Grundkörper 26 bereitgestellt wird, bildet einen Kniehebel 31. Der Grundkörper 26 verfügt des Weiteren über einen Fortsatz 32 mit einer Aufnahme oder Aufnahmeöse 33. Eine Mantelfläche eines weiteren Fortsatzes 34 des Grundkörpers 26 bildet eine Sperrverzahnung 35 eines Zwangsgesperres aus.

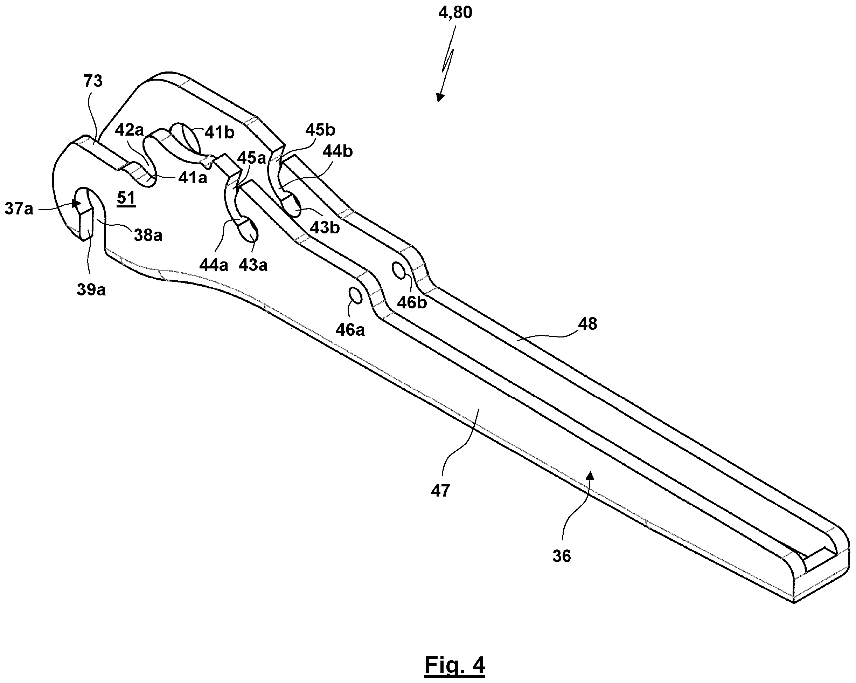

**Fig. 4** zeigt in einer räumlichen Einzelteildarstellung den beweglichen Handhebel 4. Der bewegliche Handhebel 4 verfügt über einen Griffbereich 36. Auf der in montierter Stellung dem festen Zangenteil 2 abgewandten Seite verfügt der bewegliche Handhebel 4 über ein Lagerauge 37 mit einer Randöffnung 38, die in das oder die ein Einführschlitz 39 mündet. Das Lagerauge 37 dient der Bereitstellung eines Schwenklagers 40, welches der verschwenkbaren Anlenkung der beweglichen Zangenbacke 5 an dem beweglichen Handhebel 4 dient. Der Einführschlitz 39 ist nach außen orientiert. Der Durchmesser des Lagerauges 37 ist größer als die Breite des Einführschlitzes 39.

Auf der Innenseite verfügt der bewegliche Handhebel 4 über ein weiteres Lagerauge 41a mit einer Randöffnung 42a. Die Randöffnung 42a ist dabei ungefähr in Längsrichtung des beweglichen Handhebels 4 nach vorne, also in Richtung der Zangenbacken 5, 11 orientiert. Der teilkreisförmige Querschnitt des Lagerauges 41a hat dabei (abseits der Randöffnung 42) lediglich eine Umfangserstreckung im Bereich von 150° bis 180°, vorzugsweise 160° bis 180° oder 170° bis 180°.

Der bewegliche Handhebel 4 verfügt über ein weiteres Lagerauge 43 mit Randöffnung 44, in das oder die ein Einführschlitz 45 mündet. Der Durchmesser des Lagerauges 43 ist größer als die Breite des Einführsschlitzes 45 und der Randöffnung 44. Der Einführschlitz 45 ist gekrümmt ausgebildet und verläuft zunächst mit einer Komponente nach vorne und krümmt sich dann derart, dass der Einführschlitz 45 im Bereich seiner endseitigen Öffnung ungefähr vertikal zur Längserstreckung des beweglichen Handhebels 4 orientiert ist.

Der Handhebel 4 verfügt über eine weitere Bohrung 46 im Übergangsbereich zu dem Griffbereich 36.

Ohne dass dies zwingend der Fall ist, ist auch der bewegliche Handhebel 4 mit einem U-förmigen Querschnitt mit Wangen 47, 48, die von den Seitenschenkeln des U gebildet sind, gebildet. Dies hat zur Folge, dass in beiden Wangen 47, 48 die vorgenannten Gestaltungsmerkmale realisiert sind, also in beiden Wangen 47, 48
- Lageraugen 37a, 37b mit Randöffnungen 38a, 38b und Einführschlitzen 39a, 39b zwecks Bildung des Schwenklagers 40,
- Lageraugen 41a, 41b, wobei für das dargestellte Ausführungsbeispiel nur das Lagerauge 41a eine Randöffnung 42a aufweist, während das fluchtende Lagerauge 41b randgeschlossen ausgebildet ist,
- Lageraugen 43a, 43b mit Randöffnungen 44a, 44b und zugeordneten Einführschlitzen 45a, 45b sowie
- Bohrungen 46a, 46b
vorgesehen sind. Möglich ist aber im Rahmen der Erfindung auch, dass bei den dargestellten Paaren von Lageraugen 37, 41, 43 ein Lagerauge mit Randöffnung ausgebildet ist und das andere, fluchtende Lagerauge ohne Randöffnung ausgebildet ist oder beide Lageraugen des Paares mit Randöffnung ausgebildet sind.

Das Material des beweglichen Handhebels 4 bildet zwischen den Lageraugen 37, 41 einen Kniehebel 51.

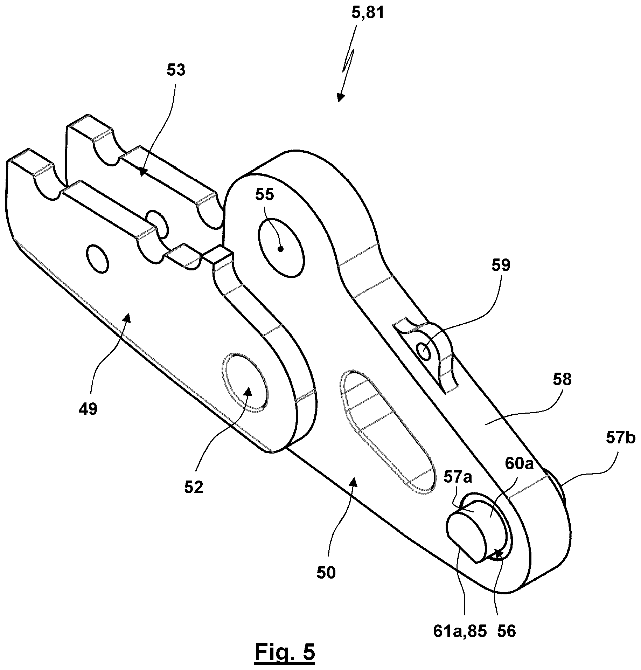

**Fig. 5** zeigt in einer räumlichen Einzelteildarstellung die bewegliche Zangenbacke 5. Die bewegliche Zangenbacke 5 weist zwei Zangenbackenteile 49, 50 auf, die über einen fluchtende Befestigungsbohrungen der Zangenbackenteile 49, 50 durchsetzenden Befestigungsbolzen 52 oder anderweitig starr miteinander verbunden sind. Hinsichtlich weiterer Informationen zu einer zweiteiligen Ausgestaltung der beweglichen Zangenbacke und der geometrischen Gestaltung wird auch Bezug genommen auf die europäische Patentanmeldung EP 3 553 900 A1, deren diesbezügliche

Offenbarung zum Gegenstand der vorliegenden Patentanmeldung gemacht wird. Möglich ist aber auch, dass die Zangenbacke 5 einstückig ausgebildet ist. In diesem Fall findet kein Befestigungsbolzen 52 Einsatz.

In Fig. 5 bildet die bewegliche Zangenbacke 5 in grober Näherung die Form eines auf dem Kopf stehenden T. Hierbei ist im Bereich eines Querschenkels des T eine Gesenkaufnahme 53 für eine Gesenkhälfte 54 gebildet, hinsichtlich welcher ebenfalls auf die Druckschrift DE 19 802 287 C1 verwiesen wird. Der Befestigungsbolzen 52 ist im Kreuzungsbereich des Vertikalschenkels des T mit dem Horizontalschenkel des T angeordnet. Im freien Endbereich des Vertikalschenkels des T verfügt die bewegliche Zangenbacke 5 über eine Lagerbohrung 55, durch welche sich in montiertem Zustand der Lagerbolzen 6 erstreckt, womit die Lagerbohrung 55 Teil des Schwenklagers 16 zur verschwenkbaren Verbindung der Zangenbacken 5, 11 ist. In dem anderen Endbereich des Horizontalschenkels des T verfügt die bewegliche Zangenbacke 5 über einen Lagerzapfenkörper 56. Der Lagerzapfenkörper 56 verfügt über zwei Lagerzapfen 57a, 57b, die sich auf beiden Seiten eines Grundkörpers 58 des Zangenbackenteils 50 erstrecken. Des Weiteren verfügt die bewegliche Zangenbacke 5, hier das Zangenbackenteil 50 über eine Aufnahme 59 oder Aufnahmeöse. Für das dargestellte Ausführungsbeispiel verfügt die bewegliche Zangenbacke 5 im Bereich der Gesenkaufnahme 53 über einen U-förmigen Querschnitt, in den ein Flansch der Gesenkhälfte 54 einsetzbar ist. Der U-förmige Querschnitt gewährleistet eine steife Abstützung der Gesenkhälfte 54.

Die Lagerzapfen 57 verfügen über einen teilzylindrischen Mantelflächenbereich 60 sowie einen Mantelflächenbereich 61 mit einer Abflachung 85.

Die beiden Lagerzapfen 57a, 57b können einstückig von der Zangenbacken 5 oder dem Zangenbackenteil 50 ausgebildet sein oder von einem Lagerbolzen, der in einer Bohrung der Zangenbacke 5 fixiert ist.

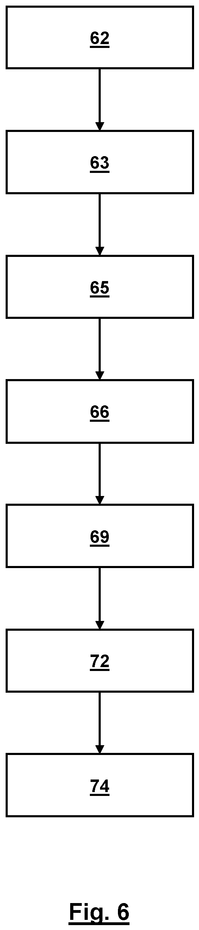

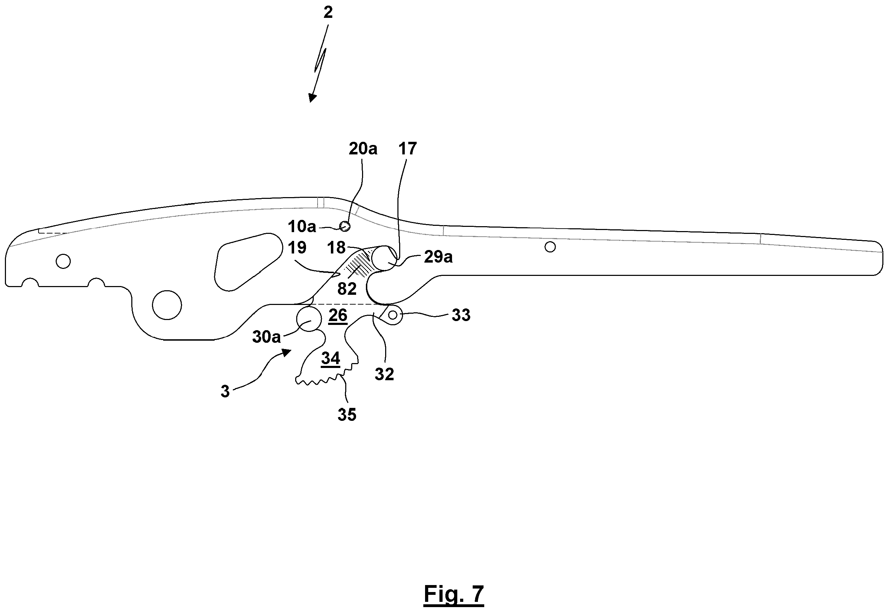

**Fig. 6** zeigt schematisch ein Verfahren zur Montage eines Handzangenwerkzeugs 1, wobei in der Beschreibung des Verfahrens Bezug genommen wird auf die unterschiedlichen in **Fig. 7 bis 12** dargestellten Montageschritte:
In einem Verfahrensschritt 62 wird der Bolzen 10a eingeführt in die Bohrungen 20 des festen Zangenteils 2. In einem Verfahrensschritt 63 wird dann der Druckhebel 3 mit dem festen Zangenteil 2 (vor-)montiert. Hierzu wird der Lagerzapfen 29b des Druckhebels 3 axial eingeführt in das Lagerauge 24 des festen Zangenteils 2, wobei die Montageachse der Längsachse der Lagerzapfen 29 entspricht und die Montageachse durch die Lageraugen 17, 24 verläuft. Hierbei kann ein gerader Rücken 77 des Druckhebels 3 entlang einer von dem Einführschlitz 19 gebildeten Führungsfläche gleiten. Ein Abschnitt 82 des Grundkörper 26 des Druckhebels 3 verfügt in der Seitenansicht eine kleinere Abmessung als der Einführschlitz 19 und die Randöffnung 18, so dass dieser Abschnitt 82 von der Seite in den Einführschlitz 19 und die Randöffnung eintreten und durch diese hindurchtreten kann, bis der Abschnitt zur Anlage an die Wange 23 des festen Zangenteils 2 kommt. Dieser Montagezustand ist in Fig. 7 dargestellt. Auf diese Weise ist ein Schwenklager 64 gebildet, über welches der Druckhebel 26 verschwenkbar an dem festen Zangenteil 2 gelagert ist. Um diese Verschwenkung zu ermöglichen, ist die Dicke des Grundkörper 26 im Bereich des Abschnitts 82 geringer als der Abstand der Wangen 22, 23, sodass der Abschnitt 82 mit der Verschwenkung zwischen die Wangen 22, 23 bewegt werden kann.

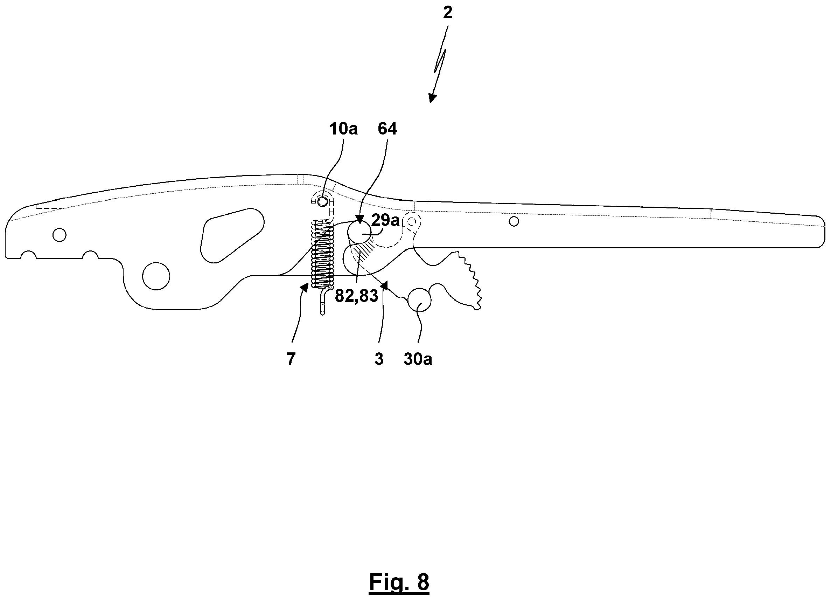

In einem Verfahrensschritt 65 wird unter Ausnutzung des Schwenkfreiheitsgrads des Schwenklagers 64 der Druckhebel 3 an dem festen Zangenteil 2 nach hinten verschwenkt, womit der Abschnitt 82 zwischen die Wangen 22, 23 bewegt wird und sich eine Überlappung 83 zwischen dem Abschnitt 82 und den Wangen 22, 23 ergibt. Durch diese Überlappung 83 wird eine Demontage in Richtung der (De-)Montageachse blockiert. Vielmehr ist eine Montage und Demontage des Druckhebels 3 mit oder von dem festen Zangenteil 2 nur in der Montage-Winkelstellung gemäß Fig. 7 möglich. Diese Montage-Winkelstellung wird aber während des gesamten Arbeitshubs des Handzangenwerkzeugs 1 nicht erreicht. Es wird dann die Öffnungsfeder 7 in den fest an dem festen Zangenteil 2 gehaltenen Bolzen 10a angehängt. Diesen Teilmontagezustand zeigt Fig. 8.

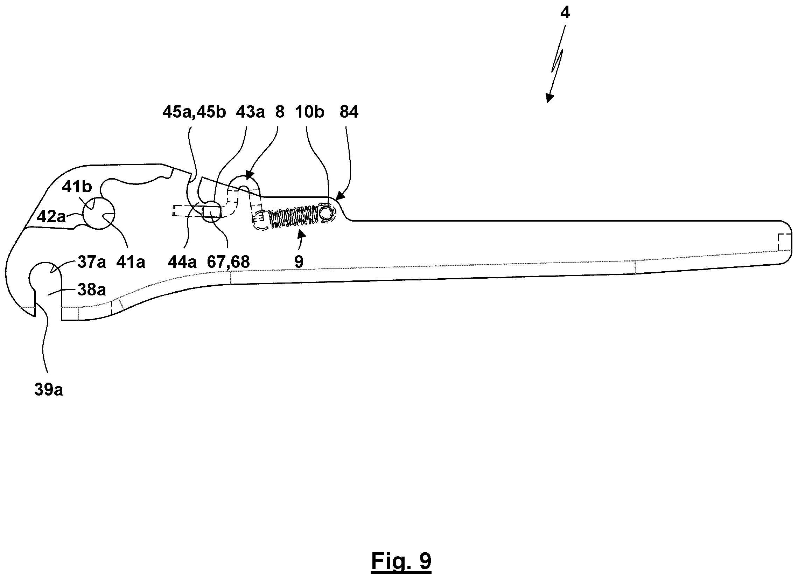

In einem Verfahrensschritt 66 werden die Sperrklinke 8 und die Sperrfeder 9 mit dem beweglichen Handhebel 4 montiert. Die Sperrklinke 8 verfügt über einen Lagerzapfen 67. Für das dargestellte Ausführungsbeispiel ist die Sperrklinke 8 aus einem gebogenen Blechteil hergestellt, wobei der Lagerzapfen 67 hier von einem Sperrklinkenfortsatz 68 ausgebildet ist. Der Lagerzapfen 67 der Sperrklinke 8 wird durch den Einführschlitz 45 und die Randöffnung 44 in das Lagerauge 43 des beweglichen Handhebels 4 eingeführt. In die Sperrklinke 8 wird die Sperrfeder 9 eingehängt. Mit einem anderen Federfußpunkt wird die Sperrfeder 9 in den Stift 10b eingehängt, der fest mit den Bohrungen 46 des beweglichen Handhebels 4 verbunden ist. Die Sperrfeder 9 zieht den Lagerzapfen 67 entgegengesetzt zur Randöffnung 44 in das Lagerauge 43, so dass die Sperrklinke 8 und die Sperrfeder 9 in dem in Fig. 9 dargestellten Teilmontageschritt verliersicher an dem beweglichen Handhebel 4 gehalten sind.

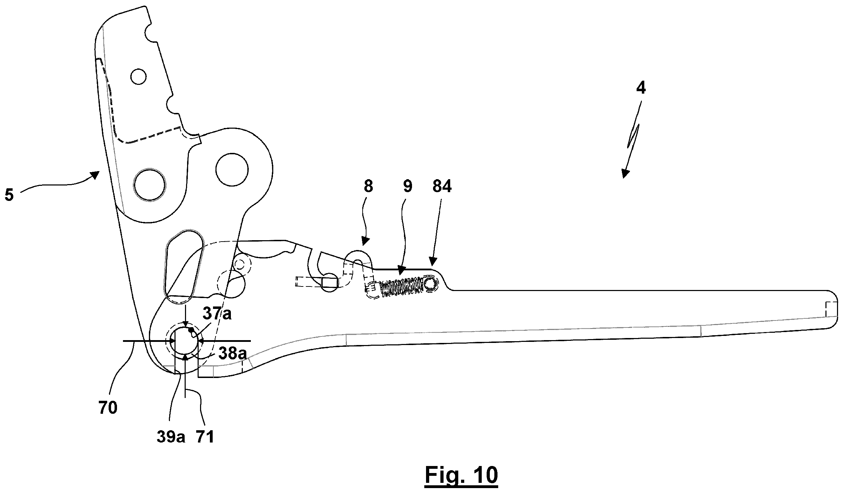

In einem Verfahrensschritt 69 erfolgt die Montage der beweglichen Zangenbacke 5 an dem beweglichen Handhebel 4. Hierzu wird die bewegliche Zangenbacke 5 in eine Montage-Winkelstellung gegenüber dem Handhebel 4 gebracht, die für das vollständig montierte Handzangenwerkzeug über den gesamten Arbeitshub nicht eingenommen werden kann. Gemäß Fig. 10 ist dabei der Horizontalschenkel des T der beweglichen Zangenbacke 5 ungefähr vertikal zur Längserstreckung des Handhebels 4 orientiert. Dies hat zur Folge, dass die Abflachung 85 des Mantelflächenbereichs 61 parallel zu dem Einführschlitz 39 orientiert ist. Somit kann eine verkleinerte Erstreckung 70 des Lagerzapfens 57 infolge der Abflachung 85 des Mantelflächenbereichs 61 genutzt werden, um die Lagerzapfen 57 durch den verengten Einführschlitz 39 und die Randöffnung 38 in das Lagerauge 37 des beweglichen Handhebels 4 einzuführen. Der Lagerzapfen 57 der beweglichen Zangenbacke 5 und das Lagerauge 37 des beweglichen Handhebels 4 bilden das Schwenklager 40 für die verschwenkbare Lagerung der beweglichen Zangenbacke 5 an dem beweglichen Handhebel 4. Wird die bewegliche Zangenbacke 5 aus der in Fig. 10 dargestellten Relativstellung zu dem beweglichen Handhebel 4 in Richtung der Strecklage verschwenkt, wird der abgeflachte Mantelflächenbereich 61 gegenüber der Randöffnung 38 verschwenkt, womit eine vergrößerte Erstreckung 71 des Lagerzapfens 57 in dem teilzylindrischen Mantelflächenbereich 60 desselben zur Wirkung kommt, der einen Austritt des Lagerzapfens 57 aus dem Lagerauge 37 unmöglich macht.

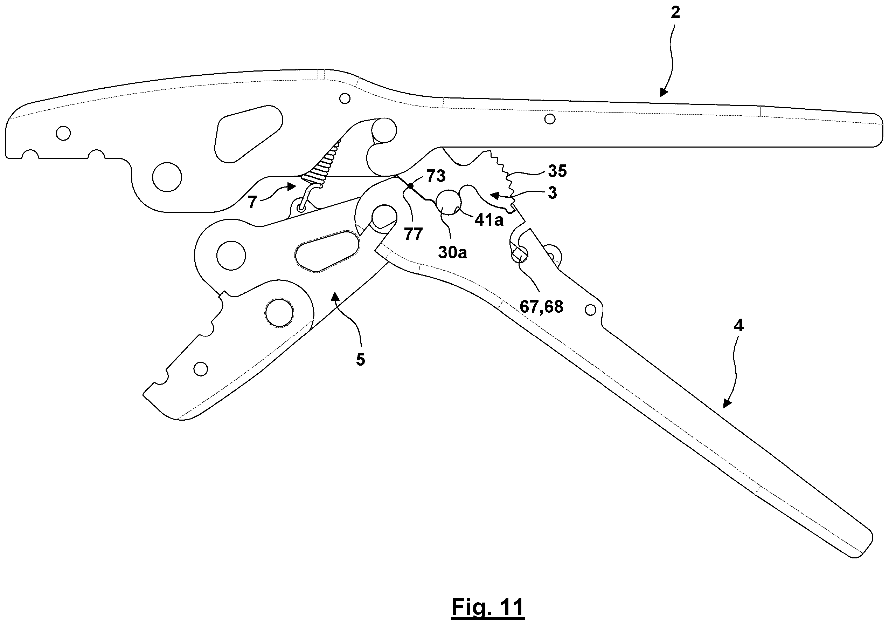

In einem Verfahrensschritt 72 erfolgt die Montage der vormontierten Teileinheiten, nämlich einerseits des festen Zangenteils 2, des Druckhebels und der Öffnungsfeder 7 in dem Montagezustand gemäß Fig. 8 und andererseits des beweglichen Handhebels 4 mit der Sperrklinke 8 und der Sperrfeder 9 sowie der beweglichen Zangenbacke 5 in dem Montagezustand gemäß Fig. 10. Zu diesem Zweck wird zunächst der freie Federfußpunkt der Öffnungsfeder 7 eingehängt in die Aufnahme 59 der beweglichen Zangenbacke 5. Des Weiteren wird der bewegliche Handhebel 4 mit der daran verschwenkbar gehaltenen beweglichen Zangenbacke 5 so an den Druckhebel 3, der verschwenkbar an dem festen Zangenteil 2 gehalten ist, angenähert, dass die Lagerzapfen 30a, 30b des Druckhebels 3 eintreten können in die Lageraugen 41a, 41b des beweglichen Handhebels. Hierbei treten die Lagerzapfen 30 axial in die Lageraugen 41 ein mit einer Montage entlang einer Montageachse, die der Längsachse der Lagerzapfen 30 entspricht und durch die Lageraugen 41 verläuft. Der Abschnitt des Grundkörper 26 im Umgebungsbereich der Lagerzapfen 30 hat dabei eine Geometrie, die kleiner ist als die Geometrie der Randöffnung 42, sodass dieser Abschnitt seitlich in die Wandöffnung 42 eintreten kann. Möglich ist, dass bei dieser Bewegung eine Gleitführung zwischen dem beweglichen Handhebel 4 und dem Druckhebel 3 erfolgt, indem der Rücken 77 des Druckhebels 3 entlang einer Führungsfläche 73 des beweglichen Handhebels 4 gleitet. Der dann erreichte Teilmontagezustand ist in Fig. 11 dargestellt.

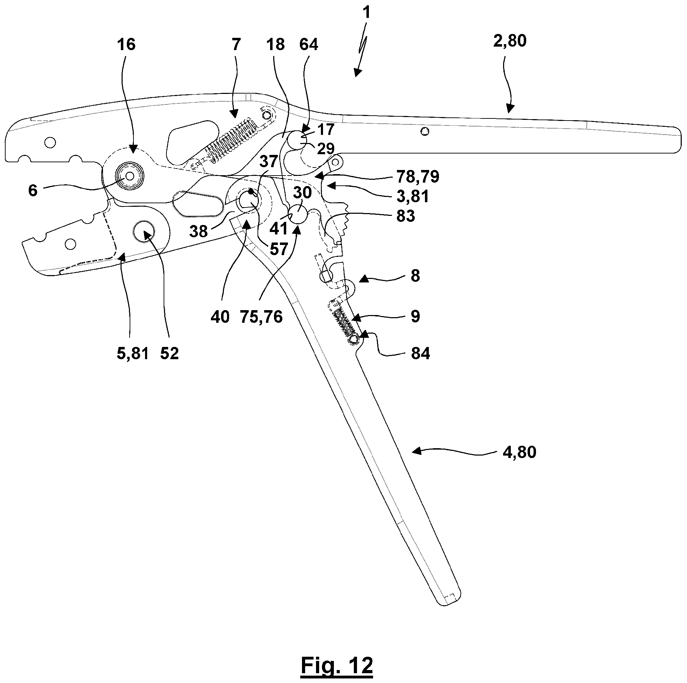

In einem Verfahrensschritt 74 werden dann die Lagerbohrungen 15 des festen Zangenteils 2 und die Lagerbohrung 55 der beweglichen Zangenbacke 5 in eine fluchtende Stellung gebracht, so dass der Lagerbolzen 6 durch die Lagerbohrungen 15, 55 gesteckt werden kann und über geeignete Sicherungselemente oder über eine Presspassung gegenüber einem unerwünschten Austritt gesichert werden kann. In dieser Stellung ist die Öffnungsfeder 7 gespannt. Die Herbeiführung der fluchtenden Stellung der Lagerbohrungen 15, 55 hat zur Folge, dass eine relative Verschwenkung des Druckhebels 3 gegenüber dem beweglichen Handhebel 4 erfolgt. Infolge dieser Verschwenkung tritt der in der Montage-Winkelstellung an dem Lagerauge 41a und der Außenkontur des beweglichen Handhebels 4 vorbeigeführte Abschnitt des Grundkörper 26 zwischen die Wangen 47, 48 des beweglichen Handhebels 4 ein, womit sich eine Überlappung 83 ergibt, die eine Demontage außerhalb der Montage-Winkelstellung unmöglich macht. Auch diese Montage-Winkelstellung wird während des Durchlaufens des Arbeitshubes nicht erreicht. Den grundsätzlich betriebsbereiten, hinsichtlich der Grundfunktion fertig montierten Zustand des Handzangenwerkzeugs zeigt Fig. 12.

Die Aufnahme des Lagerzapfens 30 des Druckhebels 3 in dem Lagerauge 41 des beweglichen Handhebels 4 stellt ein Schwenklager 75 bereit, welches ein Kniegelenk 76 für den von dem Druckhebel 3 gebildeten Kniehebel 31 und den von dem beweglichen Handhebel 4 gebildeten Kniehebel 51 bildet. Der Kniehebel 51 ist dabei in dem Schwenklager 40 an dem beweglichen Handhebel 4 und an der beweglichen Zangenbacke 5 angelenkt, während der Kniehebel 31 in dem Schwenklager 64 an dem festen Zangenteil 2 angelenkt ist. Ist das Schwenklager 16 zwischen den Zangenbacken 5, 11 montiert, können die unterschiedlichen Lagerzapfen nicht aus den (teilweise) randoffenen Lageraugen austreten:
In Fig. 11 kann der bewegliche Handhebel 4 infolge eines Anschlags nicht weiter von dem festen Zangenteil 2 weg verschwenkt werden, so dass nicht möglich ist, dass die Abflachung des Zapfens 57 so verdreht wird, dass die Montage-Winkelstellung der Zapfen 57 und des Lagerauges wieder erreicht wird und der Zapfen 57 durch die Randöffnung 38 aus dem Lagerauge 37 austreten kann.

Auch ein Austritt des Lagerzapfens 30 des Druckhebels 3 aus dem zugeordneten Lagerauge 41 des beweglichen Handhebels 4 würde eine weitere Öffnungsbewegung des beweglichen Handhebels 4 zurück in die Montage-Winkelstellung des Lagerzapfens 30 und des zugeordneten Lagerauges 41 erfordern, die aber nicht möglich ist.

Schließlich würde der Austritt des Lagerzapfens 29 aus der Randöffnung 18 des Lagerauges 17 erfordern, dass sich der Druckhebel 3 nach vorne bewegt, was aber ebenfalls nicht möglich ist.

Dadurch, dass bei dem Schwenklager 75 ein Lagerauge 41a randoffen ist, während das andere Lagerauge 41b randgeschlossen ist, und dadurch, dass bei dem Schwenklager 64 ein Lagerauge 17 randoffen ist, während das andere Lagerauge 24 randgeschlossen ist, können Verschiebungen des Druckhebels 3 beim Öffnen des Handhebels 4, unter Umständen infolge der Wirkung der Öffnungsfeder, und/oder kann eine Fehlbedienung verhindert werden.

Sowohl das feste Zangenteil 2 als auch der bewegliche Handhebel 4 verfügen wie erläutert über einen U-förmigen Querschnitt. Dies erhöht die Stabilität gegenüber einer Biegung und Torsion. Grundsätzlich wäre auch möglich, dass diese Komponenten des Handzangenwerkzeugs 1 in Plattenbauweise mit parallelen, vernieteten Platten hergestellt sind, womit aber u. U. nicht dieselbe Stabilität bei einer vergleichbaren Profilhöhe und Materialstärke erreicht werden kann.

Das U-förmige feste Zangenteil 2 und/oder der U-förmige bewegliche Handhebel 4 können durch Tiefziehen eines Blechteils oder auch als MIM-Spritzgussteil, insbesondere aus Stahl, hergestellt sein. Auch die weiteren Bauelemente wie der Druckhebel 3 oder die Zangenbackenteile 49, 50 oder eine einteilige bewegliche Zangenbacke 5 können ebenfalls aus MIM oder Feinguss hergestellt werden.

Möglich ist auch eine Herstellung der genannten Bauelemente (sämtlich oder teilweise) aus einem hochfesten Kunststoff, wobei vorzugsweise ein Kunststoff verwendet wird, dessen Festigkeit größer ist als 230 N/mm², größer ist als 250 N/mm² oder sogar größer ist als 280 N/mm².

Möglich ist, dass alternativ oder zusätzlich zu der Öffnungsfeder 7 eine weitere Feder Einsatz findet, die mit einem Federfußpunkt in die Aufnahme 33 des Druckhebels 3 eingehängt ist, während der andere Federfußpunkt an einem Bolzen angelenkt ist, der sich durch eine Bohrung 21 des festen Zangenteils 2 erstreckt.

Zwischen die Handhebel 4, 12 und die Zangenbacken 5, 11 ist ein Antriebsmechanismus 78 zwischengeordnet, der hier als Kniehebeltrieb 79 ausgebildet ist. Antriebselemente des Antriebsmechanismus 78 sind insbesondere die Kniehebel 31, 51, die von dem beweglichen Handhebel 4 und dem Druckhebel 3 ausgebildet werden.

Bei dem Schwenklager 64, über welches der Druckhebel 3 verschwenkbar gegenüber dem festen Zangenteil 2 gelagert ist, bildet das feste Zangenteil 2 ein erstes Zangenschwenkteil 80, welches das Lagerauge 17, 24 ausbildet, während der Druckhebel 3 ein zweites Zangenschwenkteil 81 bildet, welches den dem Lagerauge 17 zugeordneten Lagerzapfen 29 bereitstellt.

Hinsichtlich des Schwenklagers 75, über welches der Druckhebel 3 verschwenkbar gegenüber dem beweglichen Handhebel 4 gelagert ist, bildet der bewegliche Handhebel 4 das erste Zangenschwenkteil 80, welches das Lagerauge 41 bereitstellt, während der Druckhebel 3 das zweite Zangenschwenkteil 81 bildet, welches den Lagerzapfen 30 bereitstellt.

Bezüglich des Schwenklagers 40, über welches die bewegliche Zangen backe 5 verschwenkbar an dem beweglichen Handhebel 4 gelagert ist, bildet der bewegliche Handhebel 4 das erste Zangenschwenkteil 80, welches das Lagerauge 37 bereitstellt, während die bewegliche Zangenbacke 5 das zweite Zangenschwenkteil 81 bildet, welches den Lagerzapfen 57 für das Lagerauge 37 bereitstellt.

### BEZUGSZEICHENLISTE

- 1: Handzangenwerkzeug
- 2: festes Zangenteil
- 3: Druckhebel
- 4: beweglicher Handhebel
- 5: bewegliche Zangenbacke
- 6: Lagerbolzen
- 7: Öffnungsfeder
- 8: Sperrelement
- 9: Sperrfeder
- 10: Bolzen
- 11: feste Zangenbacke
- 12: fester Handhebel
- 13: Gesenkaufnahme
- 14: Gesenkhälfte
- 15: Lagerbohrung
- 16: Schwenklager
- 17: Lagerauge
- 18: Randöffnung
- 19: Einführschlitz
- 20: Bohrung
- 21: Bohrung
- 22: Wange
- 23: Wange
- 24: Lagerauge
- 25: Bohrung
- 26: Grundkörper
- 27: Lagerzapfenkörper
- 28: Lagerzapfenkörper
- 29: Lagerzapfen
- 30: Lagerzapfen
- 31: Kniehebel
- 32: Fortsatz
- 33: Aufnahme
- 34: Fortsatz
- 35: Sperrverzahnung
- 36: Griffbereich
- 37: Lagerauge
- 38: Randöffnung
- 39: Einführschlitz
- 40: Schwenklager
- 41: Lagerauge
- 42: Randöffnung
- 43: Lagerauge
- 44: Randöffnung
- 45: Einführschlitz
- 46: Bohrung
- 47: Wange
- 48: Wange
- 49: Zangenbackenteil
- 50: Zangenbackenteil
- 51: Kniehebel
- 52: Befestigungsbolzen
- 53: Gesenkaufnahme
- 54: Gesenkhälfte
- 55: Lagerbohrung
- 56: Lagerzapfenkörper
- 57: Lagerzapfen
- 58: Grundkörper
- 59: Aufnahme
- 60: Mantelflächenbereich
- 61: Mantelflächenbereich
- 62: Verfahrensschritt
- 63: Verfahrensschritt
- 64: Schwenklager
- 65: Verfahrensschritt
- 66: Verfahrensschritt
- 67: Lagerzapfen
- 68: Sperrklinkenfortsatz
- 69: Verfahrensschritt
- 70: Erstreckung
- 71: Erstreckung
- 72: Verfahrensschritt
- 73: Führungsfläche
- 74: Verfahrensschritt
- 75: Schwenklager
- 76: Kniegelenk
- 77: Rücken
- 78: Antriebsmechanismus
- 79: Kniehebeltrieb
- 80: erstes Zangenschwenkteil
- 81: zweites Zangenschwenkteil
- 82: Abschnitt
- 83: Überlappung
- 84: Schwenklager
- 85: Abflachung

## Patentansprüche

1. Handzangenwerkzeug (1) mit
a) Handhebeln (4, 12),
b) Zangenbacken (5, 11) und
c) einem Antriebsmechanismus (78), der
ca) Antriebselemente aufweist und
cb) die Handhebel (4, 12) so mit den Zangenbacken (5, 11) verbindet, dass über eine Relativbewegung der Handhebel (4, 12) eine Relativbewegung der Zangenbacken (5, 11) über einen Arbeitshub herbeigeführt werden kann,
d) wobei zwei Zangenschwenkteile (80, 81) vorhanden sind, die über ein Schwenklager (40) verschwenkbar miteinander verbunden sind und während des Arbeitshubs relativ zueinander verschwenkt werden,
e) ein erstes Zangenschwenkteil (80) ein Lagerauge (37) mit einer Randöffnung (38) aufweist und
f) ein Lagerzapfen (57) eines zweiten Zangenschwenkteils (81) über die Randöffnung (38) in das Lagerauge (37) des ersten Zangenschwenkteils (80) eingesetzt ist und in dem Lagerauge (37) verschwenkbar gelagert ist, womit das Schwenklager (40) gebildet ist, **dadurch gekennzeichnet, dass**
g) der Lagerzapfen (57) des zweiten Zangenschwenkteils (81) eine Mantelfläche
ga) mit einem Mantelflächenbereich (60a) aufweist, dessen Quererstreckung (71) größer ist als die Quererstreckung der Randöffnung (38) des ersten Zangenschwenkteils (80), und
gb) mit einem Mantelflächenbereich (61a) aufweist, dessen Quererstreckung (70) kleiner ist als die Quererstreckung der Randöffnung (38) des ersten Zangenschwenkteils (80),
h) wobei der Lagerzapfen (57) des zweiten Zangenschwenkteils (81) ausschließlich in einer Winkelstellung oder einem Winkelbereich der Zangenschwenkteile (80, 81) in die Randöffnung (38) des Lagerauges (37) des ersten Zangenschwenkteils (80) einsetzbar ist, welche für das vollständig montiertes Handzangenwerkzeug (1) nicht erreicht werden kann.

2. Handzangenwerkzeug (1) mit
a) Handhebeln (4, 12),
b) Zangenbacken (5, 11) und
c) einem Antriebsmechanismus (78), der
ca) Antriebselemente aufweist und
cb) die Handhebel (4, 12) so mit den Zangenbacken (5, 11) verbindet, dass über eine Relativbewegung der Handhebel (4, 12) eine Relativbewegung der Zangenbacken (5, 11) über einen Arbeitshub herbeigeführt werden kann,
d) wobei zwei Zangenschwenkteile (80, 81) vorhanden sind, die über ein Schwenklager (64; 75) verschwenkbar miteinander verbunden sind und während des Arbeitshubs relativ zueinander verschwenkt werden,
e) ein erstes Zangenschwenkteil (80) ein Lagerauge (17; 41) mit einer Randöffnung (18; 42) aufweist und
f) ein Lagerzapfen (29; 30) eines zweiten Zangenschwenkteils (81) über die Randöffnung (18; 42) in das Lagerauge (17; 41) des ersten Zangenschwenkteils (80) eingesetzt ist und in dem Lagerauge (17; 41) verschwenkbar gelagert ist, womit das Schwenklager (64; 75) gebildet ist,
**dadurch gekennzeichnet, dass**
g) das erste Zangenschwenkteil (80)
ga) das Lagerauge (17; 41a) mit der Randöffnung (18; 42a) und
gb) ein weiteres randgeschlossenes Lagerauge (24; 41b)
aufweist,
h) das zweite Zangenschwenkteil (81)
ha) den Lagerzapfen (29a; 30a) und
hb) einen weiteren Lagerzapfen (29b; 30b)
aufweist,
i) ein Grundkörper (26) des zweiten Zangenschwenkteils (81) zwischen dem Lagerzapfen (29a; 30a) und dem weiteren Lagerzapfen (29b; 30b) angeordnet ist,
j) wobei der Lagerzapfen (29a; 30a) in dem Lagerauge (17; 41a) mit der Randöffnung (18; 42a) angeordnet ist und der weitere Lagerzapfen (29b; 30b) in dem randgeschlossenes Lagerauge (24; 41b) angeordnet ist,
k) das erste Zangenschwenkteil (80) zwei parallel zueinander orientierte und beabstandete Wangen (22, 23; 47, 48) aufweist, wobei in einer ersten Wange (22; 47) das Lagerauge (17; 41a) mit der Randöffnung (18; 42a) ausgebildet ist und in einer zweiten Wange (23; 48) das weitere randgeschlossene Lagerauge (24: 41b) ausgebildet ist,
l) wobei der Lagerzapfen (29; 30) des zweiten Zangenschwenkteils (81) ausschließlich in einer Winkelstellung oder einem Winkelbereich der Zangenschwenkteile (80, 81) in die Randöffnung (18; 42) des Lagerauges (17; 41) des ersten Zangenschwenkteils (80) einsetzbar ist, welche für das vollständig montiertes Handzangenwerkzeug (1) nicht erreicht werden kann.

3. Handzangenwerkzeug (1) nach Anspruch 2, **dadurch gekennzeichnet, dass**
a) die erste Wange (22) des erste Zangenschwenkteils (80) einen Einführschlitz (19) und/oder eine Randöffnung (18) aufweist, der und/oder die in das Lagerauge (17) mündet,
b) der Grundkörper (26) des zweiten Zangenschwenkteils (81) in einem Abschnitt (82), der für eine Montage-Winkelstellung im Bereich des Einführschlitzes (19) und/oder der Randöffnung (18) angeordnet ist,
ba) kleiner ausgebildet ist als der Einführschlitz (19) und/oder die Randöffnung (18) und
bb) eine Dicke aufweist, die kleiner ist als der Abstand der beiden Wangen (22, 23), so dass bei einer Annäherung des zweiten Zangenschwenkteils (81) an das erste Zangenschwenkteil (80) in der Montage-Winkelstellung der Zangenschwenkteile (80, 81) in eine Richtung, die der Schwenkachse des nach der Montage gebildeten Schwenklagers (64) entspricht,
- ein Lagerzapfen (29b) in das randgeschlossene Lagerauge (24) eintreten kann und
- der Abschnitt (82) des Grundkörpers (26) des zweiten Zangenschwenkteils (81), der mit dem Einführschlitz (19) und/oder der Randöffnung (18) korrespondiert, durch den Einführschlitz (19) und/oder die Randöffnung (18) hindurchtreten kann,
und nach einer Veränderung des relativen Winkels der Zangenschwenkteile (80, 81) von einer Montage-Winkelstellung in eine Betriebs-Winkelstellung der Abschnitt (82) des Grundkörpers (26) des zweiten Zangenschwenkteils (81), der mit dem Einführschlitz (19) und/oder der Randöffnung (18) korrespondiert, in eine Richtung, die der Schwenkachse des nach der Montage gebildeten Schwenklagers (64) entspricht, zwischen den beiden Wangen (22, 23) gefangen ist.

4. Handzangenwerkzeug (1) nach einem der vorhergehenden Ansprüche, **dadurch gekennzeichnet, dass** das zweite Zangenschwenkteil (80) einen oder den Grundkörper (26; 58) und den Lagerzapfen (29, 30; 57) aufweist und der Lagerzapfen (29, 30; 57) einstückig mit dem Grundkörper (26) verbunden ist.

5. Handzangenwerkzeug (1) nach Anspruch 2 oder Anspruch 3 oder Anspruch 4 in Rückbeziehung auf einen der Ansprüche 2 und 3, **dadurch gekennzeichnet, dass** das erste Zangenschwenkteil (80) im Bereich der Wangen (22, 23; 47, 48) einen U-förmigen Querschnitt aufweist, wobei die beiden Seitenschenkel des U jeweils eine Wange (22, 23; 47, 48) ausbilden.

6. Handzangenwerkzeug (1) nach einem der vorhergehenden Ansprüche, **dadurch gekennzeichnet, dass** die beiden über den mindestens einen Lagerzapfen und ein Lagerauge mit einer Randöffnung verbundenen Zangenschwenkteile (80, 81)
a) ein Handhebel (4) und eine Zangenbacke (5) und/oder
b) ein Handhebel (4; 12) und ein Druckhebel (3) und/oder
c) ein Handhebel (4) und eine Sperrklinge (8) eines Zwangsgesperres sind.

7. Handzangenwerkzeug (1) nach einem der vorhergehenden Ansprüche, **dadurch gekennzeichnet, dass** mindestens eines der Zangenschwenkteile (80, 81) vollständig aus Kunststoff besteht oder hierfür ein Verbundwerkstoff mit Kunststoff oder ein faserverstärkter Kunststoff Einsatz findet.

8. Handzangenwerkzeug (1) nach einem der vorhergehenden Ansprüche, **dadurch gekennzeichnet, dass** mindestens ein Zangenschwenkteil (80, 81) in einem MIM-Verfahren hergestellt ist.

9. Handzangenwerkzeug (1) nach einem der vorhergehenden Ansprüche, **dadurch gekennzeichnet, dass** das Handzangenwerkzeug (1)
a) eine Crimpzange ist,
b) eine Schneidzange ist oder
c) eine Rohrpresszange ist.

10. Handzangenwerkzeug (1) nach einem der vorhergehenden Ansprüche, **dadurch gekennzeichnet, dass**
a) zwei Zangenschwenkteile über ein Schwenklager (16) verschwenkbar miteinander verbunden sind, bei dem ein Lagerbolzen (6) in randgeschlossenen Lageraugen (15, 55) der beiden Zangenschwenkteile angeordnet ist, , und
b) sämtliche weiteren Zangenschwenkteile (80, 81) ausschließlich über Schwenklager (40, 64, 75) verschwenkbar miteinander verbunden sind, bei denen zumindest ein Lagerzapfen (57; 29; 30) in einem Lagerauge (37; 17; 41) mit einer Randöffnung (38; 18; 42) angeordnet ist.

11. Handzangenwerkzeug (1) nach der vorhergehenden Ansprüche, **dadurch gekennzeichnet, dass** eine mechanische Zangen-Teilbaugruppe, welche sämtliche Bauelemente beinhaltet, die zur Übertragung der von dem Benutzer auf die Handhebel (4, 12) aufgebrachten Handkraft bis zu den Zangenbacken (5, 11) erforderlich sind, lediglich
a) den Lagerbolzen (6),
b) etwaige für die Sicherung des Lagerbolzens (6) erforderlichen Sicherungselemente und
c) maximal vier weitere Bauelemente aufweist.

12. Verfahren zu Montage eines Handzangenwerkzeugs (1) nach einem der vorhergehenden Ansprüche mit folgenden Verfahrensschritten:
a) Montage eines ersten Schwenklagers (64) zwischen einem Druckhebel (3) und einem festen Zangenteil (2), welches eine feste Zangenbacke (11) und einen festen Handhebel (12) ausbildet, durch Einführen eines Lagerzapfens (29) in ein randoffenes Lagerauge (17),
b) Montage eines zweiten Schwenklagers (40) zwischen einem beweglichen Handhebel (4) und einer beweglichen Zangenbacke (5) durch Einführen eines Lagerzapfens (57) in ein randoffenes Lagerauge (37),
c) Montage eines dritten Schwenklagers (75) zwischen dem Druckhebel (3) und dem beweglichen Handhebel (4) durch Einführen eines Lagerzapfens (30) in ein randoffenes Lagerauge (41), und
d) Montage eines vierten Schwenklagers (16) zwischen der beweglichen Zangenbacke (5) und dem festen Zangenteil (2) durch Einstecken eines Lagerbolzens (6) in randgeschlossene Lagerbohrungen (15, 55) der beweglichen Zangenbacke (5) und des festen Zangenteils (2) und Sicherung des Lagerbolzen (6) gegenüber einem Wiederaustritt aus den Lagerbohrungen (15, 55).

## Claims

1. Hand pliers tool (1) comprising
a) hand levers (4, 12),
b) pliers jaws (5, 11) and
c) a driving mechanism (78), which
ca) comprises driving elements and
cb) connects the hand levers (4, 12) to the pliers jaws (5, 11) in a way such that it is possible to induce a relative movement of the pliers jaws (5, 11) over a working stroke by a relative movement of the hand levers (4, 12),
d) wherein two pliers pivoting parts (80, 81) are provided which are connected for being pivoted by a pivot bearing (40) and which are pivoted relative to each other over the working stroke,
e) a first pliers pivoting part (80) comprises a bearing lug (37) comprising an edge opening (38) and
f) a bearing pin of a second pliers pivoting part (81) is inserted through the edge opening (38) into the bearing lug (37) of the first pliers pivoting part (80) and the bearing pin (57) is supported for being pivoted in the bearing lug (37), in this way the pivot bearing (40) being provided,
**characterised in that**
g) the bearing pin (57) of the second pliers pivoting part (81) comprises an outer surface
ga) comprising an outer surface portion (60a) having a transverse extension (71) which is larger than the transverse extension of the edge opening (38) of the first pliers pivoting part (80) and
gb) comprising an outer service portion (61a) having a transverse extension (70) which is smaller than the transverse extension of the edge opening (38) of the first pliers pivoting part (80),
h) wherein it is only possible to insert the bearing pin (57) of the second pliers pivoting part (81) into the edge opening (38) of the bearing lug (37) of the first pliers pivoting part (80) in an angular position or angular region which cannot be reached when the hand pliers tool (1) has been completely assembled.

2. Hand pliers tool (1), comprising
a) hand levers (4, 12),
b) pliers jaws (5, 11) and
c) a driving mechanism (78) which
ca) comprises driving elements and
cb) connects the hand levers (4, 12) to the pliers jaws (5, 11) in a way such that it is possible to induce a relative movement of the pliers jaws (5, 11) over a working stroke by a relative movement of the hand levers (4, 12),
d) wherein two pliers pivoting parts (80 ,81) are provided which are connected to each other for being pivoted by a pivot bearing (64; 75) and which are pivoted relative to each other over the working stroke
e) a first pliers pivoting part (80) comprises a bearing lug (17; 41) comprising in edge opening (18; 42) and
f) it is possible to insert a bearing pin (29; 30) of a second pliers pivoting part (81) through the edge opening (18; 42) into the bearing lug (17; 41) of the first pliers pivoting part (80) and the bearing pin (29; 30) is supported for being pivoted in the bearing lug (17; 41), in this way the pivot bearing (64; 75) being provided,
**characterised in that**
g) the first pliers pivoting part (80) comprises
ga) the bearing lug (17; 41a) comprising the edge opening (18; 42a) and
gb) another bearing lug (24; 41b) comprising a closed edge,
h) the second pliers pivoting part (81) comprises
ha) the bearing pin (29a; 30a) and
hb) another bearing pin (29b; 30b)
i) a base body (26) of the second pliers pivoting part (81) is arranged between the bearing pin (29a; 30a) and the other bearing pin (29b; 30b),
j) wherein the bearing pin (29a; 30a) is arranged in the bearing lug (17; 41a) comprising the edge opening (18; 42a) and the other bearing pin (29b; 30b) is arranged in the bearing lug (24; 41b) comprising the closed edge,
k) the first pliers pivoting part (80) comprises two walls (22, 23; 47, 48) having orientations parallel to each other and having a distance from each other, wherein a first wall (22; 47) comprises the bearing lug (17; 41a) comprising the edge opening (18; 42a) and a second wall (23;48) comprises the other bearing lug (24; 41b) comprising the closed edge,
l) wherein it is only possible to insert the bearing pin (29; 30) of the second pliers pivoting part (81) into the edge opening (18; 42) of the bearing lug (17; 41) of the first pliers pivoting part (80) in an angular position or angular region of the pliers pivoting parts (80, 81) which cannot be reached when the hand pliers tool (1) has been completely assembled.

3. Hand pliers tool (1) claim 2, **characterised in that**
a) the first wall (22) of the first pliers pivoting part (80) comprises in insertion slit (19) and/or an edge opening (80) which opens into the bearing lug (17),
b) the base body (26) of the second pliers pivoting part (81) in a section (82) which in an assembly angular position is arranged in the region of the insertion slit (19) and/or the region of the edge opening (18)
ba) is smaller than the insertion slit (19) and/or the edge opening (18) and
bb) comprises a thickness which is smaller than the distance of the two walls (22, 23), so that when in the assembly angular position of the pliers pivoting parts (80, 81) the second pliers pivoting part (81) is moved closer to the first pliers pivoting part (80) in a direction which corresponds to the pivot axis of the pivot bearing formed at the end of the assembly process
- a bearing pin (29b) is able to enter into the bearing lug (24) comprising the closed edge and
- the section (82) of the base body (26) of the second pliers pivoting part (81) which corresponds to the insertion slit (19) and/or the edge opening (18) is able to pass through the insertion slit (19) and/or the edge opening (18),
and after a change of the relative angle of the pliers pivoting parts (80, 81) from an assembly angular position into an operational angular position the section (82) of the base body (26) of the second pliers pivoting part (81) which corresponds to the insertion slit (19) and/or to the edge opening (18) is trapped between the two walls (22, 23) in a direction which corresponds to the pivot axis of the pivot bearing (64) formed at the end of the assembly process.

4. Hand pliers tool (1) of one of the preceding claims, **characterised in that** the second pliers pivoting part (80) comprises a or the base body (26; 58) and the bearing pin (29, 30; 57) and the bearing pin (29, 30; 57) is integrally connected or connected as one piece to the base body (26).

5. Hand pliers tool (1) of claim 2 or claim 3 or claim 4 when referring back to one of claims 2 and 3, **characterised in that** in the region of the walls (22, 23; 47, 48) the first pliers pivoting part (80) comprises an U-shaped cross section, the side legs of the U each form a wall (22, 23; 47,48).

6. Hand pliers tool (1) of one of the preceding claims, **characterised in that** the two pliers pivoting parts (80, 81) connected by the at least one bearing pin and a bearing lug comprising an edge opening are
a) a hand lever (4) and a pliers jaw (5) and/or
b) a hand lever (4; 12) and a pressure lever (3) and/or
c) a hand lever (4) and a latching pawl (8) of a forced locking unit.

7. Hand pliers tool (1) of one of the preceding claims, **characterised in that** at least one of the pliers pivoting parts (80, 81) is completely made of plastic or for at least one of the pliers pivoting parts (80, 81) a composite material comprising plastic or a fibre enforced plastic is used.

8. Hand pliers tool (1) of one of the preceding claims, **characterised in that** at least one pliers pivoting part (80, 31) is manufactured by use of a MIM-manufacturing process.

9. Hand pliers tool (1) of one of the preceding claims, **characterised in that** the hand pliers tool (1) is embodied as
a) crimping pliers,
b) cutting pliers or
c) tube pressing pliers.

10. Hand pliers tool (1) of one of the preceding claims, **characterised in that**
a) two pliers pivoting parts are connected to each other for being pivoted by a pivot bearing (16) wherein a bearing bolt (6) is arranged in bearing lugs (15, 55) of the two pliers pivoting parts having closed edges and
b) all of the other pliers pivoting parts (80 ,81) are only connected to each other for being pivoted by pivot bearings (40, 64, 75) wherein at least one bearing pin (57; 29; 30) is arranged in a bearing lug (37; 17; 41) comprising an edge opening (38; 18; 42).

11. Hand pliers tool (1) of one of the preceding claims, **characterised in that** a mechanical pliers assembly subgroup which contains all of the constructional elements being required for transferring the hand force applied by the user to the hand levers (4, 12) to the pliers jaws (5, 11) only comprises
a) the bearing bolt (6)
b) id applicable any securing elements required for securing the bearing bolt (6) and
c) a maximum of four additional constructional elements.

12. Method for assembling a hand pliers tool (1) of one of the preceding claims, the method comprising the following method steps:
a) assembly of a first pivot bearing (64) between the pressure lever (3) and a fixed pliers part (2) which comprises a fixed pliers jaw (11) and a fixed hand lever (12) by inserting a bearing pin (29) into a bearing lug (17) having an open edge,
b) assembly of a second pivot bearing (20) between a movable hand lever (4) and movable pliers jaw (5) by inserting a bearing pin (57) into a bearing lug (37) having an open edge,
c) assembly of a third pivot bearing (75) between the pressure lever (3) and the movable hand lever (4) by inserting a bearing pin (30) into a bearing lug (41) having an open edge and
d) assembly of a fourth pivot bearing (16) between the movable pliers jaw (5) and the fixed pliers part (2) by inserting a bearing bolt (6) into bearing bores (15, 55) having a closed edge of the movable pliers jaw (5) and of the fixed pliers part (2) and securing the bearing bolt (6) against exiting from the bearing bores (15, 55).

## Revendications

1. Outil manuel à pince (1) avec
a) des leviers manuels (4, 12),
b) des mâchoires de pince (5, 11) et
c) un mécanisme d'entraînement (78)
ca) qui comprend des éléments d'entraînement et
cb) qui relie les leviers manuels (4, 12) avec les mâchoires de pince (5, 11) de façon à ce qu'un mouvement relatif des leviers manuels (4, 12) permette un mouvement relatif des mâchoires de la pince (5, 11) sur une course de travail,
d) dans lequel deux parties de pivotement de pince (80, 81) sont présentes, qui sont reliées de manière pivotante entre elles par l'intermédiaire d'un palier de pivotement (40) et qui sont pivotées l'une par rapport à l'autre pendant la course de travail,
e) une première partie de pivotement de pince (80) comprend un œil de palier (37) avec une ouverture de bord (38) et
f) un axe de palier (57) d'une deuxième partie de pivotement de pince (81) est inséré par l'ouverture de bord (38) dans l'œil de palier (37) de la première partie de pivotement de pince (80) et est logée de manière pivotante dans l'œil de palier (37), le palier de pivotement (40) étant ainsi formé,
**caractérisé en ce que**
g) l'axe de palier (57) de la deuxième partie de pivotement de pince (81) comprend une surface d'enveloppe
ga) avec une partie de surface d'enveloppe (60a) dont l'extension transversale (71) est supérieure à l'extension transversale de l'ouverture de bord (38) de la première partie de pivotement de pince (80) et
gb) avec une partie de surface d'enveloppe (61a) dont l'extension transversale (70) est inférieure à l'extension transversale de l'ouverture de bord (38) de la première partie de pivotement de pince (80),
h) dans lequel l'axe de palier (57) de la deuxième partie de pivotement de pince (81) peut être insérée, exclusivement dans une position angulaire ou une zone angulaire des parties de pivotement de la pince (80, 81), dans l'ouverture de bord (38) de l'œil de palier (37) de la première partie de pivotement de pince (80), qui ne peut pas être obtenue pour l'outil manuel à pince (1) entièrement monté.

2. Outil manuel à pince (1) avec
a) des leviers manuels (4, 12),
b) des mâchoires de pince (5, 11) et
c) un mécanisme d'entraînement (78)
ca) qui comprend des éléments d'entraînement et
cb) qui relie les leviers manuels (4, 12) avec les mâchoires de pince (5, 11) de façon à ce qu'un mouvement relatif des leviers manuels (4, 12) permette un mouvement relatif des mâchoires de la pince (5, 11) sur une course de travail,
d) dans lequel deux parties de pivotement de pince (80, 81) sont présentes, qui sont reliées de manière pivotante entre elles par l'intermédiaire d'un palier de pivotement (64 ; 75) et qui sont pivotées l'une par rapport à l'autre pendant la course de travail,
e) une première partie de pivotement de pince (80) comprend un œil de palier (17 ; 41) avec une ouverture de bord (18 ; 42) et
f) un axe de palier (29 ; 30) d'une deuxième partie de pivotement de pince (81) est inséré par l'ouverture de bord (18 ; 42) dans l'œil de palier (17 ; 41) de la première partie de pivotement de pince (80) et est logée de manière pivotante dans l'œil de palier (17 ; 41), le palier de pivotement (64 ; 75) étant ainsi formé,
**caractérisé en ce que**
g) la première partie de pivotement de pince (80) comprend
ga) l'œil de palier (17 ; 41a) avec l'ouverture de bord (18 ; 42a) et
gb) un autre œil de palier (24 ; 41b) à bord fermé,
h) la deuxième partie de pivotement de pince (81) comprend
ha) l'axe de palier (29a ; 30a) et
hb) un autre axe de palier (29b ; 30b)
i) un corps de base (26) de la deuxième partie de pivotement de pince (81) est disposé entre l'axe de palier (29a ; 30a) et l'autre axe de palier (29b ; 30b),
j) dans lequel l'axe de palier (29a ; 30a) est disposé dans l'œil de palier (17 ; 41a) avec l'ouverture de bord (18 ; 42a) et l'autre axe de palier (29b ; 30b) est disposé dans l'œil de palier (24 ; 41b) à bord fermé,
k) la première partie de pivotement de pince (80) comprend deux joues (22, 23 ; 47, 48) orientées parallèlement et distantes entre elles, dans lequel, dans une première joue (22 ; 47), est réalisé l'œil de palier (17 ; 41a) avec l'ouverture de bord (18 ; 42a) et, dans une deuxième joue (23 ; 48), est réalisé l'autre œil de palier (24 ; 41b) à bord fermé,
l) dans lequel l'axe de palier (29 ; 30) de la deuxième partie de pivotement de pince (81) peut être inséré, exclusivement dans une position angulaire ou une zone angulaire des parties de pivotement de la pince (80, 81), dans l'ouverture de bord (18 ; 42) de l'œil de palier (17 ; 41) de la première partie de pivotement de pince (80), qui ne peut pas être obtenue pour l'outil manuel à pince (1) entièrement monté.

3. Outil manuel à pince (1) selon la revendication 2, **caractérisé en ce que**
a) la première joue (22) de la première partie de pivotement de pince (80) comprend une fente d'introduction (19) et/ou une ouverture de bord (18) qui débouche dans l'œil de palier (17),
b) le corps de base (26) de la deuxième partie de pivotement de pince (81) est disposé dans une portion (82), qui, pour une position angulaire de montage au niveau de la fente d'introduction (19) et/ou de l'ouverture de bord (18),
ba) est plus petite que la fente d'introduction (19) et/ou l'ouverture de bord (18) et
bb) présente une épaisseur qui est inférieure à la distance entre les deux joues (22, 23), de façon à ce que, lors d'un rapprochement de la deuxième partie de pivotement de pivotement (81) vers la première partie de pivotement de pince (80), dans la position angulaire de montage des parties de pivotement de pince (80, 81) dans une direction qui correspond à l'axe de pivotement du palier de pince (64) formé après le montage
- un axe de palier (29b) puisse entrer dans l'œil de palier (24) à bord fermé et
- la portion (82) du corps de base (26) de la deuxième partie de pivotement de pince (81), qui correspond à la fente d'introduction (19) et/ou à l'ouverture de bord (18), puisse traverser la fente d'introduction (19) et/ou l'ouverture de bord (18),
et, après une modification de l'angle relatif des parties de pivotement de pince (80, 81) d'une position angulaire de montage vers une position angulaire de fonctionnement, la portion (82) du corps de base (26) de la deuxième partie de pivotement de pince (81), qui correspond à la fente d'introduction (19) et/ou à l'ouverture de bord (18), dans une direction qui correspond à l'axe de pivotement du palier de pivotement (64) formé après le montage, est piégée entre les deux joues (22, 23).

4. Outil manuel à pince (1) selon l'une des revendications précédentes, **caractérisé en ce que** la deuxième partie de pivotement de pince (80) comprend un ou le corps de base (26 ; 58) et l'axe de palier (29, 30 ; 57) et l'axe de palier (29, 30 ; 57) est relié d'une seule pièce avec le corps de base (26).

5. Outil manuel à pince (1) selon la revendication 2 ou la revendication 3 ou la revendication 4 en référence à une des revendications 2 et 3, **caractérisé en ce que** la première partie de pivotement de pince (80) présente, au niveau des joues (22, 23 ; 47, 48), une section transversale en forme de U, dans lequel les deux branches latérales du U forment chacun une joue (22, 23 ; 47, 48).

6. Outil manuel à pince (1) selon l'une des revendications précédentes, **caractérisé en ce que** les deux parties de pivotement de pince (80, 81) reliées entre elles par l'intermédiaire d'un axe de palier et d'un œil de palier avec une ouverture de bord sont
a) un levier manuel (4) et une mâchoire de pince (5) et/ou
b) un levier manuel (4 ; 12) et un levier de pression (3) et/ou
c) un levier manuel (4) et un cliquet (8) d'un dispositif de blocage.

7. Outil manuel à pince (1) selon l'une des revendications précédentes, **caractérisé en ce qu'**au moins une des parties de pivotement de pince (80, 81) est constituée entièrement de matière plastique ou bien un composite avec une matière plastique ou une matière plastique renforcée par des fibres est utilisée.

8. Outil manuel à pince (1) selon l'une des revendications précédentes, **caractérisé en ce qu'**au moins une partie de pivotement de pince (80, 81) est fabriquée à l'aide d'un procédé MIM.

9. Outil manuel à pince (1) selon l'une des revendications précédentes, **caractérisé en ce que** l'outil manuel à pince (1)
a) est une pince de sertissage,
b) est une pince coupante ou
c) est une pince de pressage de tubes.

10. Outil manuel à pince (1) selon l'une des revendications précédentes, **caractérisé en ce que**
a) deux parties de pivotement de pince sont reliées de manière pivotante entre elles par l'intermédiaire d'un palier de pivotement (16), dans lequel une tige de palier (6) est disposé dans des yeux de paliers (15, 55) à bords fermés des deux parties de pivotement de pince et
b) toutes les autres parties de pivotement de pince (80, 81) sont reliées de manière pivotante entre elles par l'intermédiaire de paliers de pivotement (40, 64, 75), dans lesquels au moins un axe de palier (57 ; 29 ; 30) est disposé dans un œil de palier (37 ; 17 ; 41) avec une ouverture de bord (38 ; 18 ; 42).

11. Outil manuel à pince (1) selon l'une des revendications précédentes, **caractérisé en ce qu'**un sous-ensemble partiel de pince mécanique, qui contient tous les composants nécessaires à la transmission de la force manuelle exercée par l'utilisateur sur les leviers manuels (4, 12) jusqu'aux mâchoires de la pince (5, 11), comprend uniquement
a) la tige de palier (6),
b) des éléments de sécurisation nécessaires pour la sécurisation de la tige de palier (6),
c) au maximum quatre autres composants.

12. Procédé de montage d'un outil manuel à pince (1) selon l'une des revendications précédentes, avec les étapes suivantes :
a) montage d'un premier palier de pivotement (64) entre un levier de pression (3) et une partie de pince fixe (2), qui forme une mâchoire de pince fixe (11) et un levier manuel fixe (12), par l'insertion d'un axe de palier (29) dans un œil de palier (17) à bord ouvert,
b) montage d'un deuxième palier de pivotement (40) entre un levier manuel mobile (4) et une mâchoire de pince mobile (5) par l'insertion d'un axe de palier (57) dans un œil de palier (37) à bord ouvert,
c) montage d'un troisième palier de pivotement (75) entre le levier de pression (3) et le levier manuel mobile (4) par l'insertion d'un axe de palier (30) dans un œil de palier (41) à bord ouvert et
d) montage d'un quatrième palier de pivotement (16) entre la mâchoire mobile de la pince (5) et la partie fixe de la pince (2) par l'insertion d'une tige de palier (6) dans des perçages de palier (15, 55) à bords fermés de la mâchoire mobile de la pince (5) et de la partie fixe de la pince (2) et sécurisation de la tige de palier (6) contre une sortie des perçages de palier (15, 55).
